# EUROPEAN PATENT APPLICATION

(11) **EP 1 492 257 A2**
(43) Date of publication of application: **29.12.2004**
(21) Application number: 04253841.3
(22) Date of filing: 25.06.2004
(51) Int. Cl.: H04H 1/00

(54) **Information processing system and method**

(30) Priority: 26.06.2003 JP 2003183138; 13.04.2004 JP 2004118251
(71) Applicant: SONY CORPORATION, Tokyo 141 (JP)
(72) Inventor: Maeda, Satoru c/o Sony Corporation, Shinagawa-Ku Tokyo (JP); Onishi, Manabu c/o Sony Corporation, Shinagawa-Ku Tokyo (JP); Okazaki, Shinji c/o Sony Corporation, Shinagawa-Ku Tokyo (JP); Sakao, Katsutoshi c/o Sony Corporation, Shinagawa-Ku Tokyo (JP)
(74) Representative: Horner, David Richard

(57) **Abstract**

A broadcast reception system is provided, wherein a program reception control apparatus is connected to the Internet via a network interface to which is connected a terminal apparatus carried by a user. The broadcast received at an antenna is selected by a tuner, A/D converted, compressed at a compression unit, and encrypted at an encryption unit. The encrypted data from the encryption unit is changed to packets at packet creation unit, and transmitted to the terminal apparatus via the network interface. A User is able to view the program in real time before the end of the broadcast for the program by successively creating data based on the received data, and transmitting them.

## Description

### BACKGROUND OF THE INVENTION

### 1. Field of the Invention

The present invention relates to an information processing system and method, a recording medium, and a program, and more particularly to an information processing system, and method, a recording medium, and a program that allow the user to view broadcast in real time even outside a reception coverage area.

### 2. Description of the Related Art

Conventionally, there is a system that allows a user to view TV broadcast program produced in a foreign country in different countries by recording a TV program on a hard disk in a management server, transmitting the recorded data to a terminal apparatus via the Internet after completing the recording, and playing back the data on the terminal apparatus (For example, see Patent Document 1:Japanese Laid-Open Patent JP2003-18514A).

However, in the system as described in the above mentioned Patent Document 1, because the recorded data is transmitted to the terminal apparatus after completing the recording of the whole program in the management server, the problem is that the user who owns the terminal apparatus cannot view the program in real time while the program is being broadcast.

In view of this situation, an aim of the present invention is to enable the user to view a broadcast in real time on the terminal apparatus which the user owns.

### SUMMARY OF THE INVENTION

An information processing system according to an embodiment of the present invention comprises a first information processing apparatus and a second information processing apparatus, wherein the first information processing apparatus comprises receiving means for receiving a broadcast; creation means for creating data based on the broadcast received by the receiving means; first communication means for transmitting the data created by the creation means; and first control means for controlling the transmission of the data by said first communication means wirelessly or via a network, wherein the second information processing apparatus comprises second communication means for receiving data from the first information processing apparatus; and presentation means for presenting information based on the data received by the second communication means, and second control means for controlling the second information processing apparatus so that the second information processing apparatus receives the data wirelesslywhen wireless communication can be performed with the first information processing apparatus or receives the data via a network when the wireless communication cannot be performed.

In the information processing system according to an embodiment of the present invention, the second information processing apparatus further comprises input means for inputting an operation signal generated through a user operation, wherein the second communication means transmits a viewing request based on the operation signal received from the input means, to the first communication means wirelessly or via the network, the first communication means receives this viewing request, and the receiving means receives a broadcast based on the viewing request.

In the information processing system according to an embodiment of the present invention, the second information processing apparatus further comprises authentication means for executing authentication processing, wherein user-entered authentication data or pre-stored authentication data is transmitted for use as authentication data requested by the first information processing apparatus in response to a connection request, wherein when a permission to connect to the first information processing apparatus is obtained through the authentication processing, the second communication means transmits viewing request to the first information processing apparatus.

In the information processing system according to an embodiment of the present invention, the first information processing apparatus further comprises encryption means for encrypting the data created by the creation means and the second information processing apparatus further comprises, decryption means for decrypting the encrypted data wherein after the authentication processing, the first communication means transmits the encrypted data to the second information processing apparatus and the second information processing apparatus receives the encrypted data transmitted from the first communication means via the second communication means and decrypts the encrypted data through the decryption means.

In the information processing system according to one embodiment of the present invention, in the first information processing apparatus, the authentication processing can be omitted when the viewing request from the second communication means is received wirelessly.

In accordance with one embodiment of the present invention, an information processing method is provided for use by a first information processing apparatus that receives a broadcast for enabling a user to view a video and a sound and that transmits data based on a received signal to the second information processing apparatus. The method comprises a receiving step for receiving the broadcast based on the viewing request from the second information processing apparatus; a creation step for creating data based on the received signal; and a transmission step for transmitting the data to the second information processing apparatus wirelessly when the second information processing apparatus is at a location where wireless communication is possible or via a network when the second information processing apparatus is at a location where wireless communication is impossible.

The information processing method according to an embodiment of the present invention further comprises a communication step for receiving the viewing request from the second information processing apparatus wirelessly or via a network.

The information processing method according to an embodiment of the present invention further comprises a requesting step for requesting authentication data in response to the connection request from the second information processing apparatus; and an authentication step for authenticating the second information processing apparatus based on the authentication data from the second information processing apparatus, wherein the receiving step, the creation step, and the transmission step are executed after the authentication processing in this authentication step.

In the information processing method according to an embodiment of the present invention, the authentication processing in the authentication step checks if the authentication data transmitted from the second information processing apparatus matches pre-stored authentication data and permits the viewing request only when matched.

In the information processing method according to an embodiment of the present invention, the second information processing apparatus can decrypt encrypteddata, andthe informationprocessing method further comprises an encryption step for encrypting the data created by the creation step after the authentication processing by the authentication step, wherein the transmission step transmits the data encrypted by the encryption step to the second information processing apparatus.

In accordance with an embodiment of the present invention, an information processing method is provided for use by a second information processing apparatus, which communicates with a first information processing apparatus that receives a broadcast and transmits data based on a received signal, the method comprising a first transmission step for transmitting a connection request for requesting a viewing based on a user operation; a second transmission step for transmitting authentication data inputted by a user or pre-stored authentication data for use as authentication data requested by the first information processing apparatus in response to the connection request; a third transmission step for transmitting a transmission request which requests the transmission of data specified based on the connection request by the user operation after the authentication by the first information processing apparatus; a receiving step for receiving data transmitted from the first information processing apparatus in response to the third transmission step; and a presentation step for presenting a broadcast-based video or audio through the reception of the data, wherein the transmission and the reception in the first, second, third transmission steps and the receiving step are executed wirelessly or via a network.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE ACCOMPANYING DRAWINGS

The present invention will be described further, by way of example only, with reference to preferred embodiments thereof as illustrated in the accompanying drawings, in which:
FIG. 1 is a block diagram showing an example of the configuration of an information processing system to which the present invention is applied;
FIG. 2 is a block diagram showing an example of the configuration of a program reception control apparatus in FIG. 1;
FIG. 3 is another block diagram showing an example of the configuration of a terminal apparatus in FIG. 1;
FIG. 4 is a flowchart showing the viewing control processing of the terminal apparatus;
FIG. 5 is a flowchart that continued from that in FIG. 4 showing the viewing control processing of the terminal apparatus;
FIG. 6 is a flowchart showing the viewing control processing of the program reception control apparatus;
FIG. 7 is a flowchart showing in detail the processing of step S4 in FIG. 4;
FIG. 8 is a flowchart showing in detail the processing of step S51 in FIG. 6;
FIG. 9 is a flowchart showing the control information transmission processing of the terminal apparatus;
FIG. 10 is a flowchart showing the control execution processing of the program reception control apparatus;
FIG. 11 is a schematic block diagram showing an example of another configuration of the information processing system to which the present invention is applied;
FIG. 12 is a schematic block diagram showing an example of another connection mode of the information processing system in FIG. 11;
FIG. 13 is a schematic block diagram showing an example of a still another configuration of the information processing system to which the present invention is applied;
FIG. 14 is a block diagram showing an example of the configuration of the base station (program reception control apparatus) in FIG 11 to FIG. 13;
FIG. 15 is another block diagram showing an example of the configuration of a display apparatus (terminal apparatus) in FIG. 11 to FIG. 13; and
FIG. 16 is a block diagram showing an example of the configuration of a personal computer to which the present invention is applied.

### DETAILED DESCRIPTION OF THE PREFERRED EMBODIMENTS

Preferred embodiments of the present invention will be described below. The correspondence between the constituent features described in the claims and the examples of the embodiments of the invention is exemplified as follows. This description is to confirm that the examples supporting the invention described in the claims are described in the embodiments. Therefore, even if there is an example that is described in the embodiments of the invention but is not described here as the one corresponding to a constituent feature, that does not mean that the example does not correspond to the constituent feature. Conversely, even if an example is described here as the one corresponding to a constituent feature, that does not mean that the example does not correspond to a constituent feature other than the constituent feature.

In addition, this description does not mean that the inventions corresponding to the examples described in the embodiments of the invention are all included in the claims. In other words, this description does not deny that there is an invention that corresponds to an example described in the embodiments of the invention and but is not described in the claims of this application, that is, does not deny there is an invention that will be applied as a divisional application or added as an amendment in future.

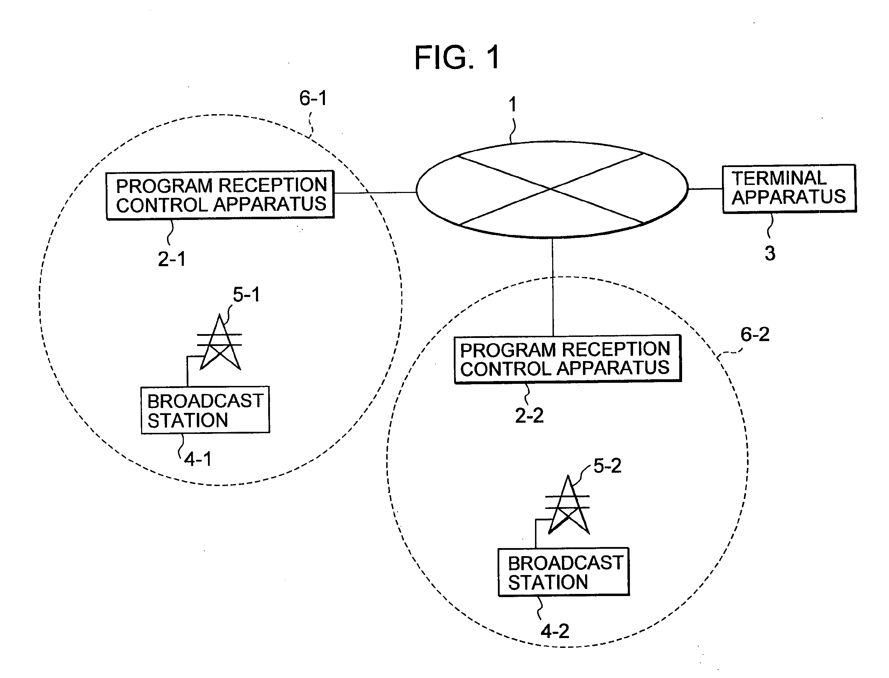

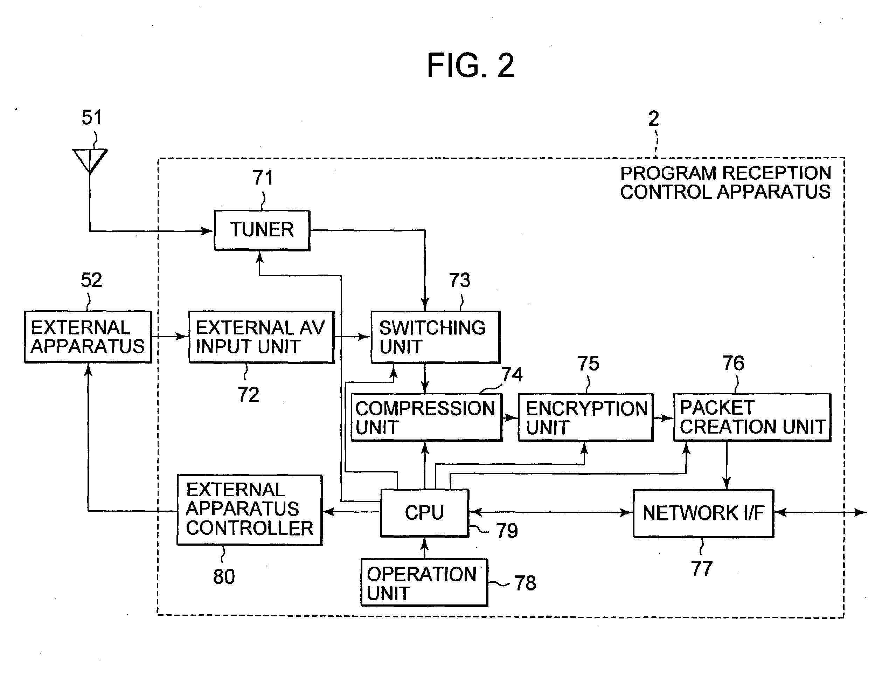

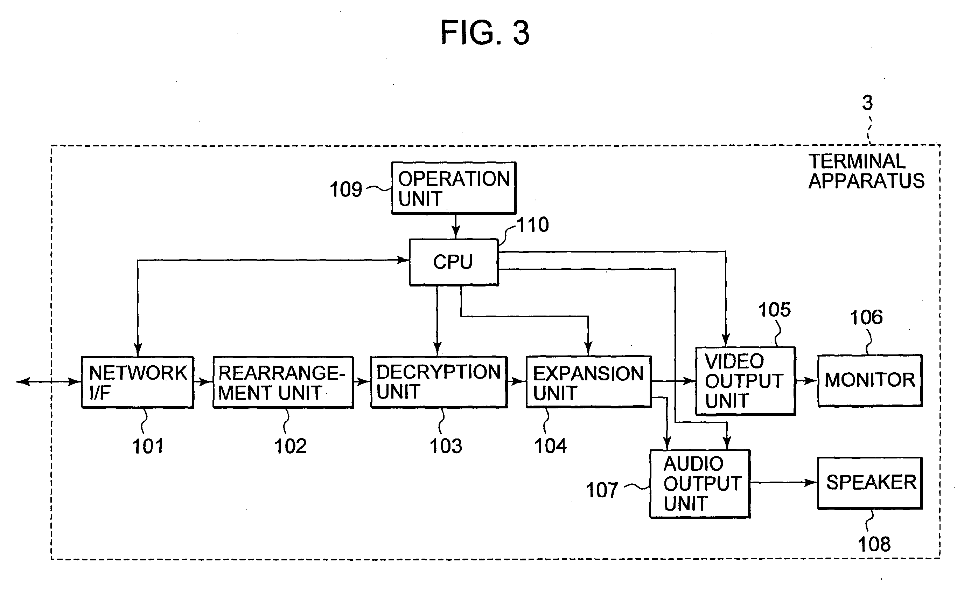

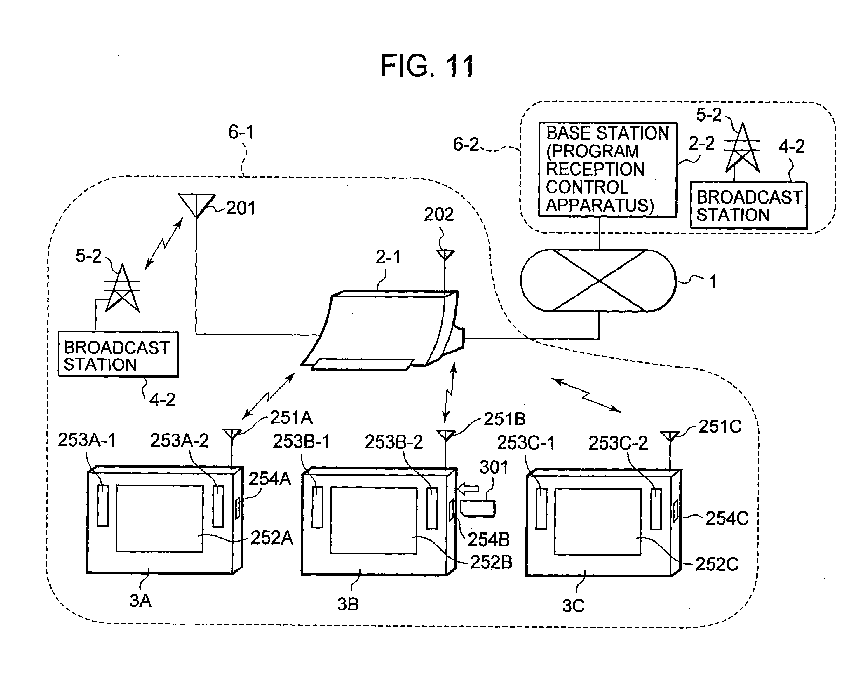

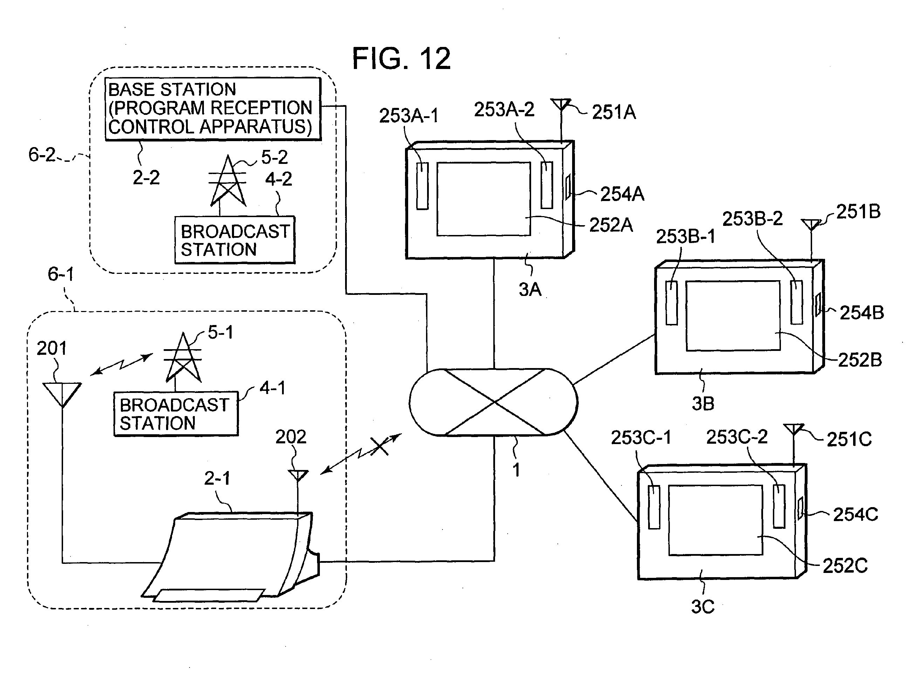

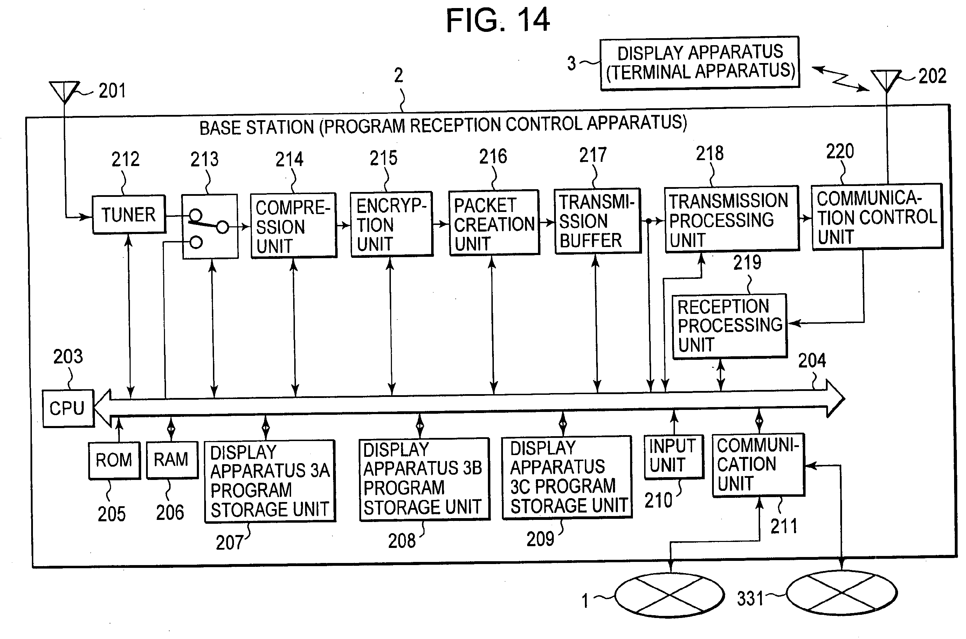

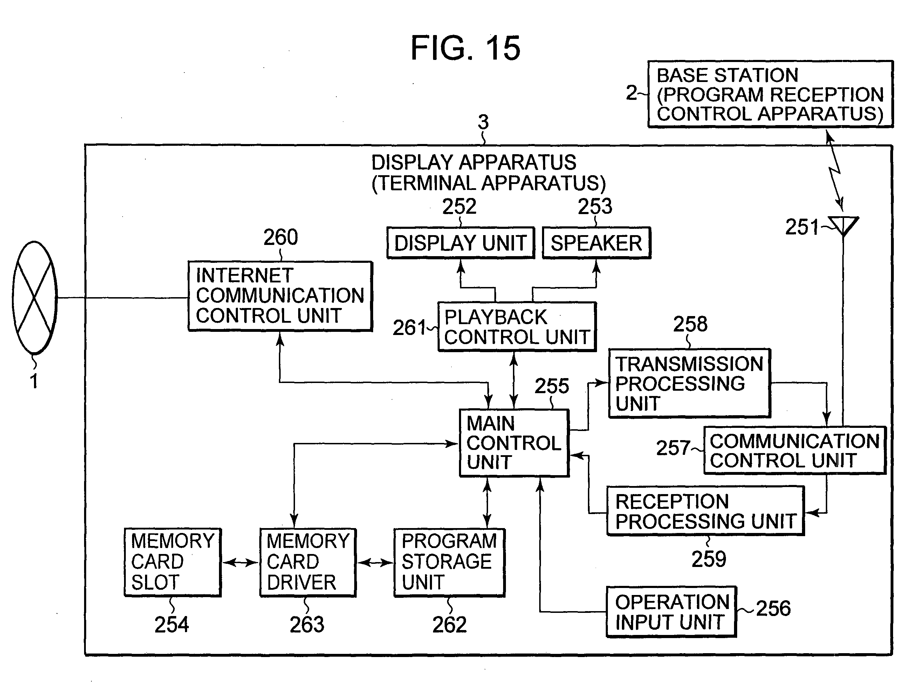

According to an embodiment of the present invention, an information processing system is provided. This information processing system is characterized in that a first information processing apparatus (for example, program reception control apparatus 2 in FIG. 1 or in FIG. 11 and FIG. 12) comprises station selection means (for example, a tuner 71 in FIG. 2 or a tuner 212 in FIG. 14) for selecting a broadcast based on control information transmitted from a second information processing apparatus (for example, a terminal apparatus 3 in FIG. 1 or in FIG. 11 and FIG. 12) and which controls the operation of the first information processing apparatus; data creation means (for example, a compression unit 74 in FIG. 2 or a compression unit 214 in FIG. 14) for creating data, one by one, based on a broadcast selected and received by the selection means; first communication means (for example, a network I/F 77 in FIG. 2 or a communication control unit 220 and a communication unit 211 in FIG. 14 ) for transmitting data created by the creation means, to the second information processing apparatus and for receiving control information from the second information processing apparatus; and first control means (for example, a CPU 79 in FIG. 2 or a CPU 203 in FIG. 14) for causing the creation of data by the creation means and the transmission of data to the second information processing apparatus by the first communication means to be executed in parallel, wherein the second information processing apparatus comprises second communication means (for example, a network I/F 101 in FIG. 3 or a communication control unit 257 and an Internet communication control unit 260 in FIG. 15) for receiving broadcast-based data from the first information processing apparatus and for transmitting control information to the first information processing apparatus; presentation means (for example, a monitor 106 and a speaker 108 in FIG. 3 or a display unit 252 and a speaker 253 in FIG. 15) for presenting information based on data received by the second communication means; and second control means (for example, the CPU 110 in FIG. 3 or a main control unit 255 in FIG. 15) for causing the reception of data by the second communication means and the presentation of information by the presentation means to be executed in parallel, and wherein the first information processing apparatus is installed in a reception coverage area of a broadcast (for example, a reception coverage area 6 in FIG. 1 or in FIG. 11 and FIG. 12) and the second information processing apparatus is installed outside the reception coverage area of a broadcast.

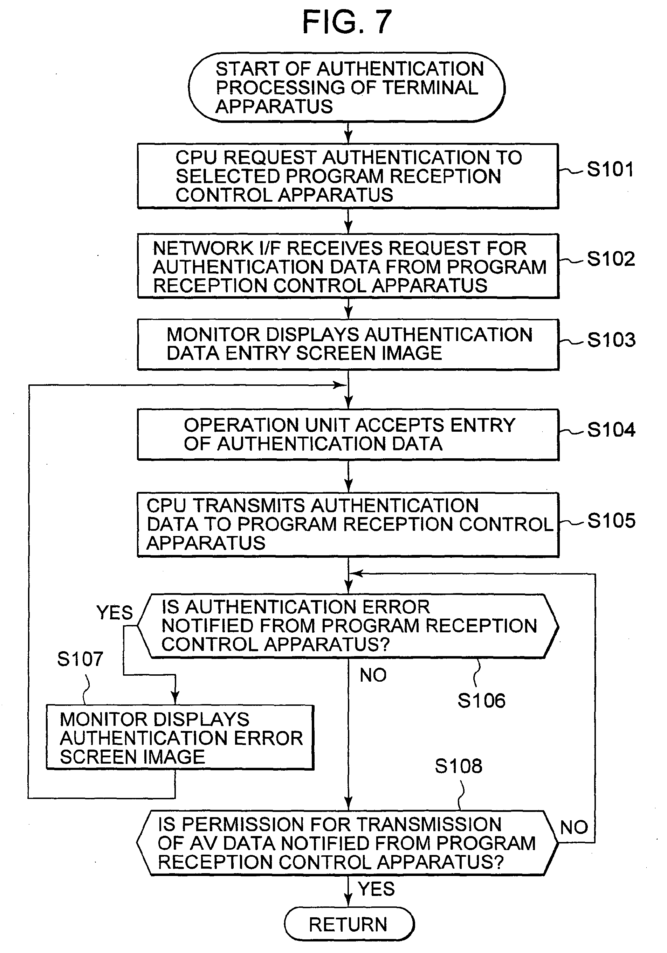

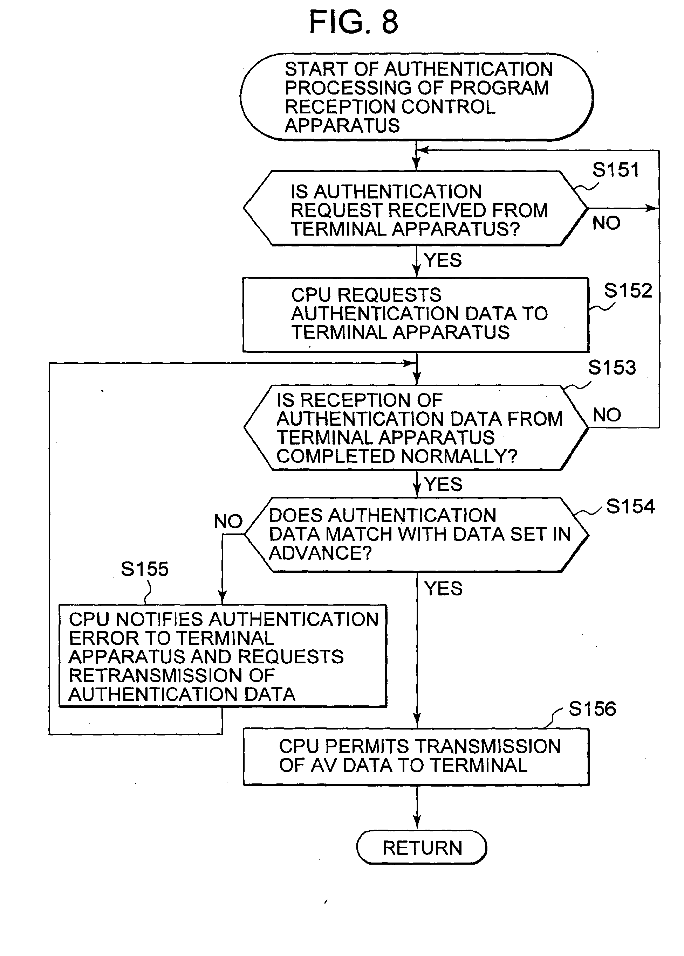

In this information processing system, the first information processing apparatus further comprises authentication means (for example, a CPU 79 in FIG. 2 or a CPU 203 in FIG. 14 that executes authentication processing in FIG. 8) for authenticating the second information processing apparatus; and encryption means (for example, an encryption unit 75 in FIG. 2 or an encryption unit 215 in FIG. 14) for encrypting the data created by the creation means wherein, when the second information processing apparatus is authenticated by the authentication means, the first communication means transmits the data encrypted by the encryption means, to the second information processing apparatus and the first control means causes the creation of the data by the creation means and the transmission of the data to the second information processing apparatus by the first communication means as well as the authentication of the second information processing apparatus by the authentication means and the encryption of the data by the encryption means to be executed in parallel. The second information processing apparatus further comprises authentication means (for example, a CPU 110 in FIG. 3 or a main control unit 255 in FIG. 15 that executes authentication processing in FIG. 7) for executing authentication processing required for authenticating itself by the authentication means of the first information processing apparatus; and decryption means (for example, a decryption unit 103 in FIG. 3 or a playback control unit 261 in FIG. 15) for decrypting the encrypted data when the data transmitted from the first communication means of the first information processing apparatus and received by the second communication means is encrypted, wherein the presentation means further presents information based on the data decrypted by the decryption means and the second control means causes the reception of the data by the second communication means and the presentation of the information by the presentation means as well as the authentication receiving processing by the authentication receiving means and the decryption of the data by the decryption means to be executed in parallel.

In this information processing system, the first communication means of the first information processing apparatus (for example, a program reception control apparatus 2 in FIG. 14) comprises first network communication means (for example, a communication unit 211 in FIG. 14) for communicating with the second information processing apparatus via a predetermined network (for example, Internet 1 in FIG. 11 and FIG. 12); and first wireless communication means (for example, a communication control unit 220 in FIG. 14) for communicating wirelessly with the second information processing apparatus, and the second communication means of the second information processing apparatus (for example, a terminal apparatus 3 in FIG. 15) comprises second network communication means (for example, an Internet communication control unit 260 in FIG. 15) for communicating with the first network communication means of the first information processing apparatus via the network; and second wireless communication means (for example, a communication control unit 257 in FIG. 15) for communicating wirelessly with the first wireless communication means of the first information processing apparatus. The second information processing apparatus can be installed also in the reception coverage area of the broadcast. When installed in a range where wireless communication is possible, each of the first information processing apparatus and the second information processing apparatus can receive and transmit the data or the control information using the first wireless communication means or the second wireless communication means. When installed outside the range where wireless communication is possible, each of the first information processing apparatus and the second information processing apparatus can receive and transmit the data or the control information using the first network communication means or the second network communication means.

According to an embodiment of the present invention, a first information processing apparatus is provided. This first information processing apparatus (for example, a program reception control apparatus 2 in FIG. 2 or in FIG. 11 and FIG. 12) is characterized by comprising station selection means (for example, a tuner 71 in FIG. 2 or a tuner 212 in FIG. 14) for selecting a broadcast based on control information from another information processing apparatus (for example, a terminal apparatus 3 in FIG. 1 or in FIG. 11 and FIG. 12) installed outside the reception coverage area of a broadcast (for example, a reception coverage area 6 in FIG. 1 or in FIG. 11 and FIG. 12) ; creation means (for example, a compression unit 74 in FIG. 2 or a compression unit 214 in FIG. 14) for creating data, one by one, based on the broadcast selected and received by the station selection means; communication means (for example, a network I/F77 in FIG. 2 or communication control unit 220 and a communication unit 211 in FIG. 14) for transmitting data created by the creation means to the other information processing apparatus and for receiving control information from the other information processing apparatus; and control means (for example, a CPU 79 in FIG. 2 or a CPU 203 in FIG. 14) for causing the creation of data by the creation means and the transmission of data to the other information processing apparatus by the communication means to be executed in parallel.

The first information processing apparatus further comprises authentication means (for example, a CPU 79 in FIG. 2 or a CPU 203 in FIG. 14 that executes authentication processing in FIG. 8) for authenticating the other information processing apparatus; and encryption means (for example, an encryption unit 75 in FIG. 2 or an encryption unit 215 in FIG. 14) for encrypting the data created by the creation means wherein, when the other information processing apparatus is authenticated by the authentication means, the communication means transmits the data, encrypted by the encryption means, to the other information processing apparatus and the control means causes the creation of the data by the creation means and the transmission of the data to the other information processing apparatus by the communication means as well as the authentication of the other information processing apparatus by the authentication means and the encryption of the data by the encryption means to be executed in parallel.

The communication means of this first information processing apparatus (forexample, a program reception control apparatus 2 in FIG. 14) comprises network communication means (for example, a communication unit 211 in FIG. 14) for communicating with the other information processing apparatus via a predetermined network (for example, Internet 1 in FIG. 11 and FIG. 12); and wireless communication means (for example, a communication control unit 220 in FIG. 14) for communicating wirelessly with the other information processing apparatus. When the information processing apparatus itself is installed in a range where wireless communication with the other information processing apparatus is possible, the wireless communication means transmits the data and receives the control information. When the information processing apparatus itself is installed outside the range where wireless communication with the other information processing apparatus is possible, the network communication means transmits the data or receives the control information.

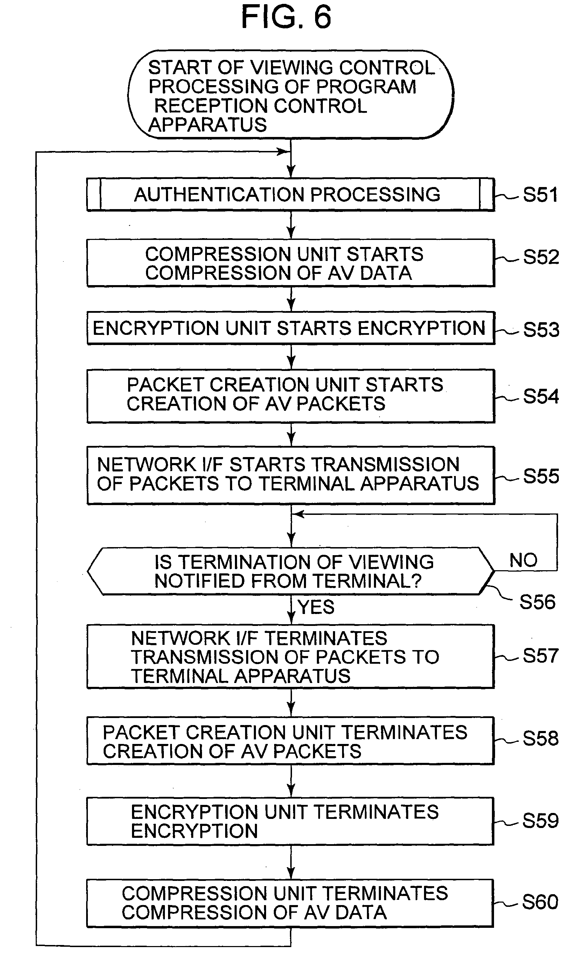

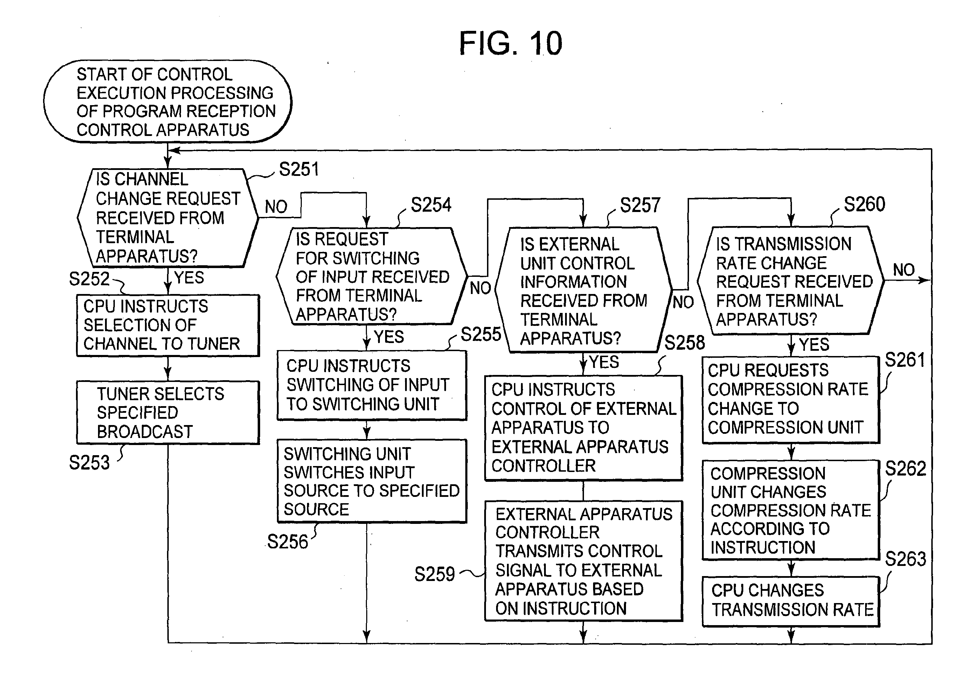

According to an embodiment of the present invention, a first information processing method is provided. This first information processing method is characterized by comprising a station selection step (for example, step S253 in FIG. 10) for selecting a broadcast based on control information from another information processing apparatus (for example, a terminal apparatus 3 in FIG. 1) installed outside a broadcast reception coverage area (for example, a reception coverage area 6 in FIG. 1) ; a creation step (for example, step S52 in FIG. 6) for creating data, one by one, based on the broadcast selected and received by the processing of the station selection step; and a transmission step (for example, step S55 in FIG. 6) for transmitting the data, created by the processing of the creation step, to the other information processing apparatus, wherein the creation of data by the processing of the creation step and the transmission of data to another information processing apparatus by the processing of the transmission step are executed in parallel.

According to an embodiment of the present invention, a first recording medium is provided. A program on this first recording medium is characterized by comprising a station selection step (for example, step S253 in FIG. 10) for selecting a broadcast based on control information from another information processing apparatus (for example, a terminal apparatus 3 in FIG. 1) installed outside a broadcast reception coverage area (for example, a reception coverage area 6 in FIG. 1) ; a creation step (for example, step S52 in FIG. 6) for creating data, one by one, based on the broadcast selected and received by the processing of the station selection step; and a transmission control step (for example, step S55 in FIG. 6) for controlling the transmission of the data, created by the processing of the creation step, to the other information processing apparatus, wherein the creation of data by the processing of the creation step and the control of the transmission of data to another information processing apparatus by the processing of the transmission control step are executed in parallel.

According to an embodiment of the present invention, a first program is provided. Because an example of the constituent features of the first program is the same as that of the program on the first recording medium described above, the description is omitted.

According to an embodiment of the present invention, a second information processing apparatus is provided. This second information processing apparatus (for example, a terminal apparatus 3 in FIG. 1 or in FIG. 11 and FIG. 12) is characterized by comprising communication means (for example, a network I/F 101 in FIG. 3 or a communication control unit 257 and an Internet communication control unit 260 in FIG. 15) for receiving broadcast-based data from another information processing apparatus (for example, a program reception control apparatus 2 in FIG. 1 or in FIG. 11 and FIG. 12) installed in a broadcast reception coverage area (for example, a reception coverage area 6 in FIG. 1 or in FIG. 11 and FIG. 12) and for transmitting control information to the other information processing apparatus for controlling the operation of the other information processing apparatus; presentation means (for example, a monitor 106 and a speaker 108 in FIG. 3 or a display unit 252 and a speaker 253 in FIG. 15) for presenting information based on data received by the communication means; and control means (for example, a CPU 110 in FIG. 3 or a main control unit 255 in FIG. 15) for causing the reception of data by the communication means and the presentation of information by the presentation means to be executed inparallel,whereinthesecondinformation processing apparatus is installed outside the broadcast reception coverage area.

This second information processing apparatus is characterized by further comprising acceptance means (for example, an operation unit 109 in FIG. 3 or an operation input unit 256 in FIG. 15) for accepting the operation of selecting the station of the broadcast.

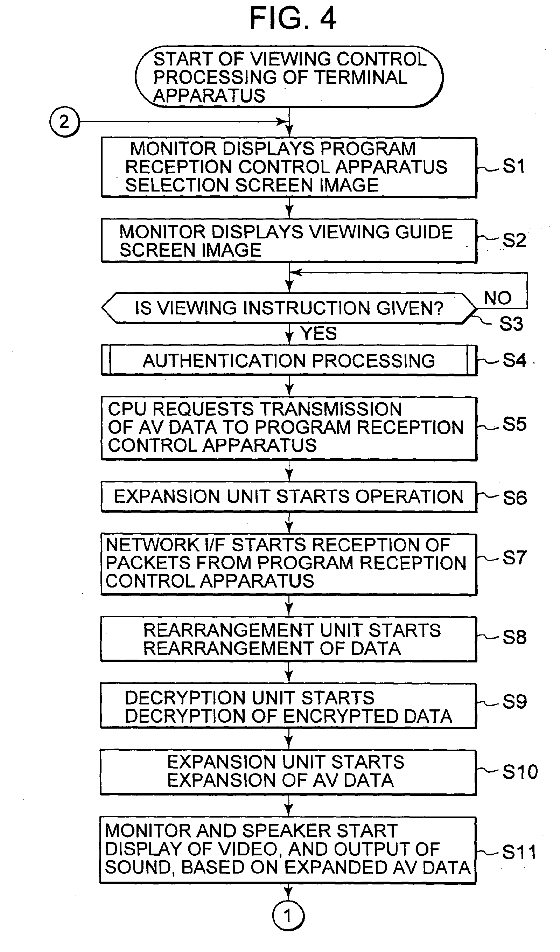

This second information processing apparatus is characterized by further comprising selection means (for example, a CPU 110 in FIG. 3 or a main control unit 255 in FIG. 15 that executes the processing of step S1 in FIG. 4) for selecting the other information processing apparatus, with which communication is performed, from a plurality of the other information processing apparatuses (for example, program reception control apparatuses 2-1 and 2-2 in FIG. 1 or in FIG. 11 and FIG. 12) , wherein the communication means receives the broadcast-based data from the other information processing apparatus, selected by the selection means, and transmits control information for controlling the operation of the other information processing apparatus to the other information processing apparatus selected by the selection means.

This second information processing apparatus further comprises authentication receiving means (for example, a CPU 110 in FIG. 3 or a main control unit 255 in FIG. 15 that executes authentication processing in FIG. 7) for executing authentication receiving processing required for authenticating the information processing apparatus itself by the other information processing apparatus; and decryption means (for example, a decryption unit 103 in FIG. 3 or a playback control unit 255 in FIG. 15) for decrypting the encrypted data when the data, which is transmitted from the other information processing apparatus and received by the communication means as a result of the authentication of the information processing apparatus itself by the other information processing apparatus through the execution of the authentication receiving processing by the authentication receiving means, is encrypted wherein the presentation means further presents information based on the data decrypted by the decryption means and the control means causes the reception of the data by the communication means and the presentation of the information by the presentation means as well as the authentication receiving processing by the authentication receiving means and the decryption of the data by the decryption means to be executed in parallel.

The communication means of this second information processing apparatus (for example, a terminal apparatus 3 in FIG. 15) comprises network communication means (for example, an Internet communication control unit 260 in FIG. 15) for communicating with the other information processing apparatus via a predetermined network; and wireless communication means (for example, a communication control unit 257 in FIG. 15) for communicating wirelessly with the other information processing apparatus. The information processing apparatus itself can be installed also in the reception coverage area of the broadcast. When the information processing apparatus itself is installed in a range where wireless communication with the other information processing apparatus is possible, the wireless communication means can receive the data or transmit the control information. When the information processing apparatus itself is installed outside the range where wireless communication with the other information processing apparatus is possible, the network communication means can receive the data or transmit the control information.

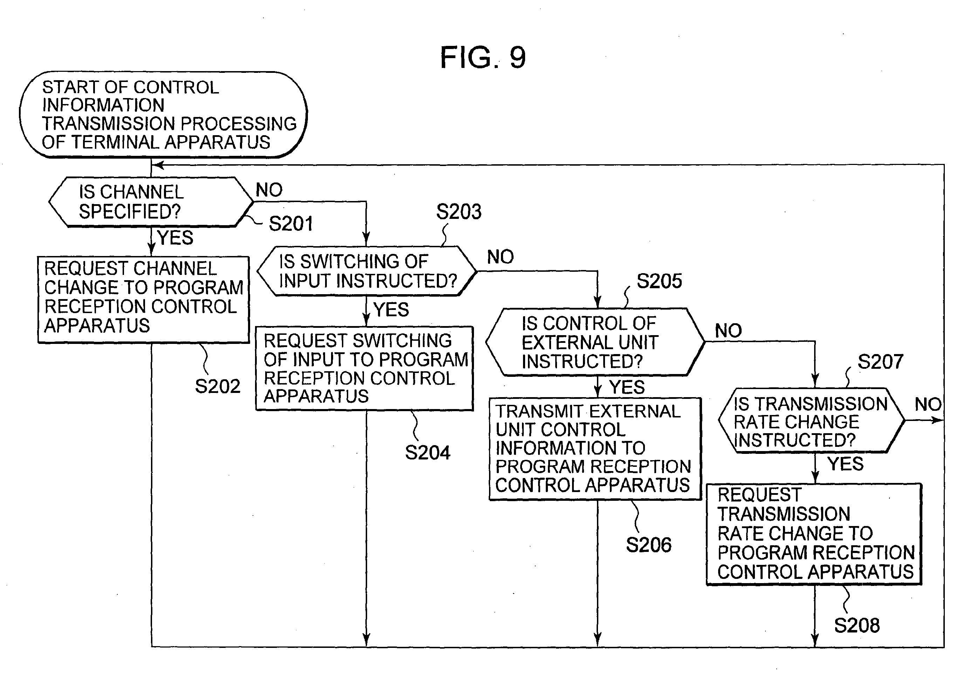

According to an embodiment of the present invention, a second information processing method is provided. This second information processing method is characterized by comprising a receiving step (for example, step S7 in FIG. 4) for receiving broadcast-based data from another information processing apparatus (for example, a program reception control apparatus 2 in FIG. 1 or in FIG. 11 and FIG. 12) installed in the reception coverage area of a broadcast (for example, a reception coverage area 6 in FIG. 1 or in FIG. 11 and FIG. 12); a presentation step (for example, step S11 in FIG. 4) for presenting information based on the data received by the processing of the receiving step; and a transmission step (for example, step S202 in FIG. 9) for transmitting control information to the other information processing apparatus for controlling the operation of the other information processing apparatus, wherein the reception of data by the processing of the receiving step and the presentation of information by the processing of the presentation step are executed in parallel.

According to an embodiment of the present invention, a second recording medium is provided. A program on this second recording medium is characterized by comprising a receiving control step (for example, step S7 in FIG. 4) for controlling the reception of broadcast-based data from another information processing apparatus (for example, a program reception control apparatus 2 in FIG. 1 or in FIG. 11 and FIG. 12) installed in the reception coverage area of a broadcast (for example, a reception coverage area 6 in FIG. 1 or in FIG. 11 and FIG. 12); a presentation step (for example, step S11 in FIG. 4) for presenting information based on the data whose reception is controlled by the processing of the receiving control step; and a transmission control step (for example, step S202 in FIG. 9) for controlling the transmission of control information to the other information processing apparatus for controlling the operation of the other information processing apparatus, wherein the control of the reception of data by the processing of the receiving control step and the presentation of information by the processing of the presentation step are executed in parallel.

According to an embodiment of the present invention, a second program is provided. Because an example of the constituent features of the second program is the same as that of the program on the second recording medium described above, the description is omitted.

FIG. 1 shows the configuration of one embodiment of an information processing system to which the present invention is applied.

Referring to FIG. 1, a program reception control apparatuses 2-1 and 2-2 and a terminal apparatus 3 are connected to the Internet 1.

A broadcast station 4-1 broadcasts a program, which includes video signals and audio signals, from a broadcast antenna 5-1. A reception coverage area 6-1 surrounded by a dotted line indicates an area in which the audience can receive a program broadcasted from the broadcast antenna 5-1, via a reception unit to view the program.

The program reception control apparatus 2-1 installed within the reception coverage area 6-1 can receive a program broadcasted from the broadcast antenna 5-1 of the broadcast station 4-1. Although not shown in FIG. 1, an external apparatus 52 (see FIG. 2) is connected to the program reception control apparatus 2-1.

Abroadcast station 4-2 broadcasts a program which includes video signals and audio signals, from a broadcast antenna 5-2. A reception coverage area 6-2 surrounded by a dotted line indicates an area in which the audience can receive a program broadcasted from the broadcast antenna 5-2, via a reception unit to view the program.

The program reception control apparatus 2-2 installed within the reception coverage area 6-2, can receive a program broadcasted from the broadcast antenna 5-2 of the broadcast station 4-2. Although not shown in FIG. 1, an external apparatus is connected to the program reception control apparatus 2-2.

The program reception control apparatuses 2-1 and 2-2 are basically similar in configuration, and if it is not necessary to distinguish individually, they are collectively called as a program reception control apparatus 2. The same applies to the other configurations in the description below.

The terminal apparatus 3 is an apparatus which plays back and outputs a video and an audio, and is carried by a user, for example. Because the terminal apparatus 3 is installed outside the reception coverage area 6 in FIG. 1, the video and the audio of a program is not able to be outputted by directly receiving the program broadcasted from the broadcast antenna 5.

Next, FIG. 2 shows an example of the detailed configuration of the program reception control apparatus 2.

Referring to FIG. 2, a tuner 71 selects a broadcast instructed by a CPU 79, among the received electric waves by a reception antenna 51, converts the video signal and the audio signal of the selected broadcast from analog to digital, generates video data and audio data (hereinafter, video data and audio data are collectively called AV data) , andoutputs the generated AV data to a switching unit 73.

An external AV input unit 72 outputs AV data supplied from the external apparatus 52 to the switching unit 73.

The switching unit 73 selects only one of AV data supplied from the tuner 71 and AV data supplied from the external AV input unit 72 according to an instruction from the CPU 79, and outputs the selected AV data to a compression unit 74.

The compression unit 74 compresses the AV data supplied from the switching unit 73 using a standard specification such as MPEG (Moving Picture Experts Group) 2 or MPEG4, and outputs the compressed AV data (hereinafter called as compressed data) to an encryption unit 75. The compression unit 74 compresses the AV data at a compression rate instructed by the CPU 79.

The encryption unit 75 encrypts the compressed data supplied from the compression unit 74 based on a predetermined encryption method in accordance with the instruction from the CPU 79, and outputs the encrypted compressed data to a packet creation unit 76.

The packet creation unit 76 creates packets by segmenting the encrypted compressed data supplied from the encryption unit 75 into a predetermined size according to the instruction from the CPU 79 and by adding header information and so on, and then outputs the created packets to a network interface (I/F) 77.

The network interface 77 transmits the packets supplied from the packet creation unit 76 to the terminal apparatus 3 via the Internet 1. Also, when information is received from the terminal apparatus 3, the network interface 77 supplies the received information to the CPU 79.

An operation unit 78 is configured to have, for example, a plurality of buttons and dials, accepts an operation input from the user, and outputs the operation signal based on the accepted operation to the CPU 79.

The CPU 79 controls the whole operation of the ) program reception control apparatus 2 based on the operation signal supplied from the operation unit 78 and based on the information supplied from the network interface 77 and received from the terminal apparatus 3. For example, the CPU 79 controls the selection of broadcast station by the tuner 71, the switching of AV data to be selected by the switching unit 73, the compression rate used when the AV data is compressed by the compression unit 74, and the operation of the encryption unit 75, packet creation unit 76, and ) network interface 77. When external apparatus control information for controlling the external apparatus 52 is received from the terminal apparatus 3, the CPU 79 supplies this information to an external apparatus controller 80.

The external apparatus controller 80 transmits a control signal for controlling the operation of the external apparatus 52 to the external apparatus 52 based on the external apparatus control information supplied from the CPU 79. This control signal may be ) transmitted via a cable or transmitted wirelessly. For example, when the external apparatus 52 is able to be controlled by a remote commander provided on the external apparatus 52 via infrared communication, the external apparatus controller 80 transmits the control signal to the external apparatus 52 via infrared communication that is the same as that used by the remote commander.

For example, if the external apparatus 52 is a video tape recorder, the control signal output from the external apparatus controller 80 can be a signal instructing playback, stop, fast-forward, or rewind to the external apparatus 52. If the external apparatus 52 is a TV game machine, the control signal can be a signal based on an operation that is input to the terminal apparatus 3 by the user.

The external apparatus 52 is an electronic unit connected to the program reception control apparatus 2. The external apparatus 52, for example, a video tape recorder, a DVD (Digital Versatile Disc) recorder, a hard disk recorder, or a TV game machine, controls its own operation based on the control signal from the external apparatus controller 80 and outputs AV data, as necessary to the external input unit 72. It is, of course, possible to connect a plurality of external apparatuses to the program reception control apparatus 2.

Next, FIG. 3 shows an example of the internal configuration of the terminal apparatus 3.

Referring to FIG. 3, a network interface (I/F) 101 receives packets from the program reception control apparatus 2 via the Internet 1, and supplies received packets to a rearrangement unit 102. When various instructions from the program reception control apparatus 2 are received, the network interface 101 notifies them to a CPU 110.

The rearrangement unit 102 extracts data, which is included in the packets supplied from the network interface 101 and segmented into a predetermined size, rearranges the data into a sequence of the original data, and outputs the rearranged data to a decryption unit 103. The rearranged data is the encrypted compressed data.

The decryption unit 103 decrypts the encrypted compressed data supplied from the rearrangement unit 102, using the decryption method corresponding to the encryption method of the encryption unit 75, and outputs thus decrypted compressed data to a expansion unit 104.

The expansion unit 104 expands the compressed data supplied from the decryption unit 103 based on the compression (encoding) standard of the compression unit 74, and outputs the expanded data, that is, the video data of the original AV data to a video output unit 105, and the audio data to an audio output unit 107.

The video output unit 105 outputs the video signal to a monitor 106 based on the video data supplied from the expansion unit 104. The video output unit 105 also outputs the video signal such as a predetermined guide screen image to the monitor 106 according to an instruction from the CPU 110. The monitor 106 is configured with a liquid crystal display, for example, and displays a video based on the video signal supplied from the video output unit 105.

The audio output unit 107 supplies the audio signal to a speaker 108 based on the audio data supplied from the expansion unit 104. The speaker 108 outputs an audio sound based on the audio signal supplied from the audio output unit 107.

An operation unit 109 is configured with buttons, dials, a touch panel, and so on, accepts an operation input from the user, and outputs the operation signal to the CPU 110 based on the accepted operation.

The CPU 110 controls the whole operation of the terminal apparatus 3 based on the operation signal supplied from the operation unit 109, and also based on the instructions from the program reception control apparatus 2. The CPU 110 also creates control information for controlling the operation of the tuner 71, the switching unit 73, the compression unit 74, and the external apparatus 52 of the program reception control apparatus 2, for example, based on the operation signal from the operation unit 109, and transmits the created control information through the network interface 101 to the program reception control apparatus 2.

Note that the terminal apparatus 3 is not limited to the example shown in FIG. 3 but may take various forms as long as the terminal apparatus is able to execute a sequence of processing that will be described later. For example, the terminal apparatus 3 may be a portable terminal apparatus or a cellular phone that the user can carry.

Next, the viewing control processing of the terminal apparatus 3 will be described with reference to the flowchart in FIG. 4.

In step S1, the CPU 110 instructs the display of the program reception control apparatus selection screen image on the monitor 106 to the video output unit 105. The video output unit 105 causes the monitor 106 to display the program reception control apparatus selection screen image according to the instruction from the CPU 110. The program reception control apparatus selection screen image is a guide screen image for allowing the user to select the program reception control apparatus of the communication opponent among plural program reception control apparatuses (for example, program reception control apparatuses 2-1 and 2-2 in FIG. 1) ; for example, the screen has icons corresponding to the program reception control apparatuses 2-1 and 2-2. The user can operate the operation unit 109 while watching this program reception control apparatus selection screen image in order to select a desired program reception control apparatus. When one program reception control apparatus is selected by the user, the processing goes to step S2.

In step S2, the CPU 110 instructs the display of the viewing guide screen image on the monitor 106 to the video output unit 105. The video output unit 105 causes the monitor 106 to display the viewing guide screen image according to the instruction from the CPU 110. The viewing guide screen image is a screen image for allowing the user to select a broadcast station (channel) or the external apparatus 52; for example, an image imitating the buttons on the remote commander is displayed. The user can operate the operation unit 109 to give a program viewing instruction to select a broadcast station (channel) to be used for viewing, or to select the external apparatus 52 while watching this viewing guide screen image.

In step S3, the CPU 110 checks whether the user issues a viewing instruction based on the operation signal from the operation unit 109, and remains in the wait state by repeating the processing of step S3 until a viewing instruction is given by the user. When a viewing instruction is given by the user, the processing goes to step S4.

In step S4, the CPU 110 accesses the program reception control apparatus 2 selected by the user in step S1 through the network interface 101 via the Internet 1 to execute authentication processing for connection to the program reception control apparatus 2. If the authentication is successful, the processing goes to step S5. If the authentication is unsuccessful, the CPU 110 instructs the display of the authentication error guide on the monitor 106 to the video output unit 105. The authentication processing in step S4 will be described in detail later with reference to the flowchart in FIG. 7.

In step S5, the CPU 110 requests the transmission of the AV data of a user-specified broadcast station or the external apparatus 52 to the program reception control apparatus 2 that authentication is completed, through the network interface 101 via the Internet 1. The subsequent processing is performed to or from the program reception control apparatus 2 for which the authentication is completed in step S4. The communication between the program reception control apparatus 2 and the terminal apparatus 3 is performed via the Internet 1 and, therefore, the communication via the Internet 1 is not mentioned in the description below.

In step S6, the CPU 110 instructs the start of operation to the expansion unit 104. The expansion unit 104 starts operation according to the instruction from the CPU 110. The expansion unit 104 starts operation in step S6 and, after starting the operation, continues expansion processing until step S15 that will be described later is reached.

In response to the request from the terminal apparatus 3, the program reception control apparatus 2 transmits packets including the AV data. Therefore, in step S7, the network interface 101 starts receiving the packets from the program reception control apparatus 2. The network interface 101 supplies the received packets to the rearrangement unit 102.

In step S8, the rearrangement unit 102 extracts segmented data from the packets supplied from the network interface 101, and starts rearranging of the original data (encrypted compressed data). The rearrangement unit 102 supplies the rearranged data to the decryption unit 103. After starting the data rearrangement processing in step S8, the rearrangement unit 102 continues rearrangement processing until step S17 that will be described later is reached.

In step S9, the decryption unit 103 starts decrypting the encrypted compressed data supplied from the rearrangement unit 102 based on the encryption method. The decryption unit 103 supplies the decrypted data, that is, the compressed data to the expansion unit 104. The decryption unit 103 starts decryption processing in step S9 and then continues decryption processing until step S16 that will be described later is reached.

In step S10, the expansion unit 104 starts expanding the compressed data supplied from the decryption unit 103. The expansion unit 104 supplies the video data included in the expanded AV data to the video output unit 105, and supplies the audio data to the audio output unit 107. The expansion unit 104 starts expanding the compressed data in step S10 and then continues expansion processing until step S15 that will be described later is reached.

In step S11, the video output unit 105 starts supplying the video signal to the monitor 106 based on the video data supplied from the expansion unit 104. This enables the video to be displayed on the monitor 106 based on the video data supplied from the program reception control apparatus 2. Also, in step S11, the audio output unit 107 starts supplying the audio signal to the speaker 108 based on the audio data supplied from the expansion unit 104. This enables the sound to be output from the speaker 108 based on the audio data supplied from the program reception control apparatus 2. The video output unit 105 starts displaying the video on the monitor 106 in step S11 and then continues displaying the video on the monitor 106 until step S13 that will be described later is reached. The audio output unit 107 starts outputting the sound from the speaker 108 in step S11 and then continues outputting the sound from the speaker 108 until step S13 that will be described later is reached.

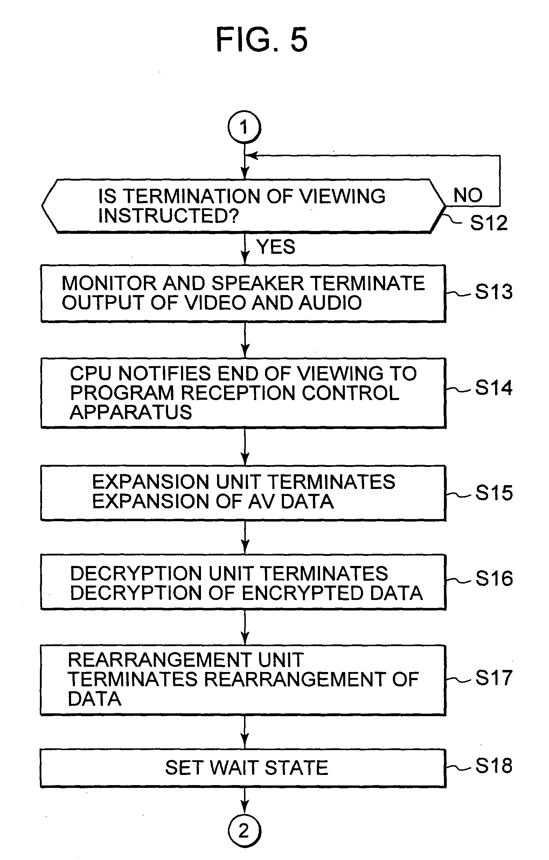

After the processing in step S11 in FIG. 4, the CPU 110 checks if the user issues a termination of viewing instruction based on the operation signal from the operation unit 109 in step S12 in FIG. 5 and, until the termination of viewing instruction is received, remains in the wait state by repeating the processing in step S12. During this time, too, the network interface 101 continues to receive packets, the rearrangement unit 102 continues to rearrange the original data, the decryption unit 103 continues to decrypt the encryption, the expansion unit 104 continues to expand the AV data, the video output unit 105 continues to display the video on the monitor 106, and the audio output unit 107 continues to output the sound from the speaker 108. Executing the processing of the network interface 101, the rearrangement unit 102, the decryption unit 103, the expansion unit 104, the video output unit 105, and the audio output unit 107 at the same time and in parallel as described above allows the video to be displayed, and the sound to be output in real time based on the AV data received by the program reception control apparatus 2 so that the user can view it.

If the CPU 110 finds that a termination of viewing instruction is received from the operation unit 109 in step S12, the processing goes to step S13.

In step S13, the CPU 110 instructs the termination of the display of the video, received from the program reception control apparatus 2 onto the monitor 106 to the video output unit 105 and, at the same time, instructs the termination of the output of the sound, received from the program reception control apparatus 2 from the speaker 108 to the audio output unit 107. The video output unit 105 terminates the display of the video, received from the program reception control apparatus 2 onto the monitor 106 according to the instruction from the CPU 110. The audio output unit 107 terminates the output of the sound received from the program reception control apparatus 2 from the speaker 108 according to the instruction from the CPU 110.

In step S14, the CPU 110 transmits a termination of program viewing instruction from the network interface 101 to the program reception control apparatus 2 via the Internet 1.

In step S15, the CPU 110 instructs the termination of the expansion of the compressed data to the expansion unit 104. The expansion unit 104 terminates the expansion of the compressed data according to the instruction from the CPU 110.

In step S16, the CPU 110 instructs the termination of the decryption of the encrypted compressed data to the decryption unit 103. The decryption unit 103 terminates the decryption of the encrypted compressed data according to the instruction from the CPU 110.

In step S17, the CPU 110 instructs the termination of the rearrangement of the data segmented into packets to the rearrangement unit 102. The rearrangement unit 102 terminates the rearrangement of the data, segmented into packets according to the instruction from the CPU 110.

In step S18, the CPU 110 puts itself in the wait state. After that, the processing returns to step S1 to repeat the processing described above beginning with step S1.

As described above, the viewing control processing of the terminal apparatus 3 is executed.

Next, the viewing control processing of the program reception control apparatus 2 will be described with reference to the flowchart in FIG. 6.

In step S51, the CPU 79 performs authentication processing for authenticating the terminal apparatus 3 when the terminal apparatus 3 accesses the program reception control apparatus 2. If the terminal apparatus 3 is authenticated and the connection of the terminal apparatus 3 to the program reception control apparatus 2 is permitted as the result of authentication processing, the processing goes to step S52. If the connection from the terminal apparatus 3 to the program reception control apparatus 2 is not permitted as the result of the authentication processing, the processing does not go to step S52. The authentication processing in step S51 will be described in detail later with reference to the flowchart in FIG. 8.

The AV data is supplied from the tuner 71 and the external apparatus 52 to the switching unit 73. Thus, the compression unit 74 starts compressing the AV data supplied from the switching unit 73 in step S52. The compression unit 74 supplies the compressed data to the encryption unit 75. The compression unit 74 starts compression processing in step S52 and continues the compression processing until step 60 that will be described later is reached.

In step S53, the encryption unit 75 starts encrypting the compressed data supplied from the compression unit 74. The encryption unit 75 supplies the encrypted compressed data to the packet creation unit 76. The encryption unit 75 starts encrypting the compressed data in step S53, and continues the encryption processing until step S59 that will be described is reached.

In step S54, the packet creation unit 76 starts segmenting the encrypted compressed data supplied from the encryption unit 75 into plural packets . The packet creation unit 76 supplies the created packets to the network interface 77. The packet creation unit 76 starts packet creation in step S54 and then continues packet creation until step S58 that will be described later is reached.

In step S55, the network interface 77 starts transmitting the packets supplied from the packet creation unit 76, to the terminal apparatus 3 via the Internet 1. The network interface 77 starts packet transmission in step S55, and continues the packet transmission processing until step S57 that will be described later is reached.

In step S56, the CPU 79 checks if a termination of viewing notification is received from the terminal apparatus 3 via the network interface 77, and remains in the wait state by repeating the processing in step S56 until a viewing end notification is received from the terminal apparatus 3. During that time, too, the compression unit 74 continues to compress the AV data, the encryption unit 75 continues to encrypt the compressed data, the packet creation unit 76 continues to segment the encrypted compressed data into packets, and the network interface 77 continues to transmit the packets to the terminal apparatus 3. Executing the processing of the compression unit 74, the encryption unit 75, the packet creation unit 76, and the network interface 77 at the same time and in parallel as described above allows the video and the sound of the program being broadcasted to be converted to AV data in real time and to be transmitted to the terminal apparatus 3. Because the terminal apparatus 3 displays in real time the AV data (and outputs the sound) supplied from the program reception control apparatus 2, the user can view a program broadcasted by a broadcast station 4 in real time at the program broadcast time as if the user is a viewer in the reception coverage area 6.

If it is found that the CPU 79 receives a termination of viewing notification from the terminal apparatus 3 in step S56, the processing goes to step S57.

In step S57, the network interface 77 terminates the transmission of packets to the terminal apparatus 3.

In step S58, the packet creation unit 76 terminates the creation of packets.

In step S59, the encryption unit 75 terminates the encryption of the compressed data.

In step S60, the compression unit 74 terminates the compression of the AV data.

After that, the processing returns to step S51 and the processing of step S51 and the following steps described above is repeated.

The viewing control processing described above allows the user to view a broadcast program using the terminal apparatus 3 even if the user is outside the reception coverage area 6.

Next, the authentication processing in step S4 in FIG. 4 will be described with reference to the flowchart in FIG. 7.

In step S101 in FIG. 7, the CPU 110 issues an authentication request from the network interface 101 to the program reception control apparatus 2 selected in step S1 in FIG. 4.

The program reception control apparatus 2 requests the transmission of authentication data to the terminal apparatus 3 in step S152 in FIG. 8 that will be described later. Thus, in step S102, the network interface 101 receives the request for authentication data from the program reception control apparatus 2, and notifies the request to the CPU 110.

In step S103, the CPU 110 instructs the display of an authentication data entry screen image on the monitor 106 for receiving authentication data to the video output unit 105. The authentication data is, for example, a pre-set character string, and the user can enter the character string of authentication data by operating the operation unit 109.

Then, the operation unit 109 accepts the entry of authentication data from the user in step S104.

In step S105, the CPU 110 transmits the authentication data entered in step S104 from the network interface 101 to the program reception control apparatus 2.

After that, if the program reception control apparatus 2 succeeds in authenticating the terminal apparatus 3 and the transmission of AV data to the terminal apparatus 3 is permitted, a permission notification permitting the transmission of the AV data is transmitted from the program reception control apparatus 2 to the terminal apparatus 3. On the other hand, if the program reception control apparatus 2 does not succeed in authenticating the terminal apparatus 3, an authentication error notification is transmitted from the program reception control apparatus to the terminal apparatus 3.

So, in step S106, the CPU 110 checks if an authentication error is notified from the program reception control apparatus 2 and, if an authentication error is notified, the processing goes to step S107.

In step S107, the CPU 110 instructs the display of a guide on the monitor 106 to the video output unit 105 to indicate that the authentication fails. The monitor 106 displays this guide as well as a guide indicating that authentication data may be accepted again. The user can operate the operation unit 109 to enter authentication data again according to this guide. After the processing in step S107, the processing returns to step S104 and the processing of step S104 and the following steps described above is repeated.

If the CPU 110 finds that no authentication error is notified from the program reception control apparatus 2 in step S106, the processing goes to step S108.

The CPU 110 checks if the transmission permission of AV data is notified from the program reception control apparatus 2 via the network interface 101 in step S108. If the transmission permission of AV data is not notified from the program reception control apparatus 2, the processing returns to step S106 and the processing of step S106 and the following steps described above is repeated. If the CPU 110 finds that the transmission permission of AV data is notified in step S108, the authentication processing is terminated and the processing goes to step S5 in FIG. 4.

The authentication processing of the terminal apparatus 3 is executed as described above.

Although the entry of authentication data from the user is described as an example in the above description, it is also possible to store authentication data in advance in the terminal apparatus 3 and, when authentication data is requested from the program reception control apparatus 2, to transmit the authentication data, stored in advance, to the program reception control apparatus 2.

Next, the authentication processing in step S51 in FIG. 6 will be described in detail with reference to the flowchart in FIG. 8.

In step S151 in FIG. 8, the CPU 79 checks if an authentication request is received from the terminal apparatus 3, and remains in the wait state until the authentication request is received from the terminal apparatus 3 by repeating the processing in step S151. If an authentication request is received from the terminal apparatus 3 in step S101 in FIG. 7, the CPU 79 finds that the authentication request is received from terminal apparatus 3 in step S151 and the processing goes to step S152.

In step S152, the CPU 79 requests the transmission of authentication data to the terminal apparatus 3 via the network interface 77.

The terminal apparatus 3 transmits authentication data to the program reception control apparatus 2 in step S105 in FIG. 7. In step S153, the CPU 79 checks if the reception of the authentication data from the terminal apparatus 3 is completed normally. If the reception of the authentication data from the terminal apparatus 3 is not completed normally, the processing returns to step S151 and the processing of step S151 and the following steps described above is repeated.

If the CPU 79 finds that the reception of the authentication data from the terminal apparatus 3 is completed normally in step S153, the processing goes to step S154.

The program reception control apparatus 2 holds authentication data for authenticating the terminal apparatus 3, in advance, in advance. In step S154, the CPU 79 checks if the authentication data received from the terminal apparatus 3 matches the authentication data held in advance. If the authentication data received from the terminal apparatus 3 does not match the authentication data held in advance, the processing goes to step S155.

In step S155, the CPU 79 notifies an authentication error to the terminal apparatus 3 via the network interface 77, and requests the retransmission of the authentication data to the terminal apparatus 3.

In step S107 in FIG. 7, the terminal apparatus 3 causes the monitor 106 to display the guide of the authentication error, accepts the entry of authentication data again in step S104, and again transmits the authentication data to the program reception control apparatus 2 in step S105.

After step S155, the processing returns to step S153, and the processing in step S153 and the following steps described above are repeated. That is, the CPU 79 checks if the reception of the retransmitted authentication data is completed normally in step S153 and, if the reception of the authentication is completed normally, the CPU 79 checks if the authentication data received from the terminal apparatus 3 matches the authentication data held in advance in step S154.

As described above, the processing from step S153 to step S155 is repeated until the authentication data received from the terminal apparatus 3 matches the authentication data held in advance. If the CPU 79 finds that the authentication data received from the terminal apparatus 3 matches the authentication data held in advance in step S154, the processing goes to step S156.

In step S156, the CPU 79 transmits the notification for the permission of transmission of AV data to the terminal apparatus 3 to the terminal apparatus 3 via the network interface 77. After that, the processing goes to step S52 in FIG. 6.

The authentication processing of the program reception control apparatus 2 is performed as described above.

The authentication processing described above prevents others from illegally acquiring AV data from the program reception control apparatus 2 and viewing it.

An information processing system, to which an embodiment of the present invention is applied, allows the terminal apparatus 3 to control the operation of the tuner 71, the switching unit 73, and the compression unit 74 of the program reception control apparatus 2 and the external apparatus 52 after the transmission of AV data to the terminal apparatus is permitted through the authentication processing. In that case, control information for controlling the operation of the program reception control apparatus 2 or the external apparatus 52 is transmitted to the authenticated program reception control apparatus 2 from the terminal apparatus 3.

Next, the control information transmission processing of the terminal apparatus 3 will be described with reference to the flowchart in FIG. 9.

In step S201, the CPU 110 checks if the user specifies a channel based on the operation signal from the operation unit 109 and, if the user specifies a channel, the processing goes to step S202.

In step S202, the CPU 110 transmits control information which requests a channel change including channel information indicating a channel is specified, to the program reception control apparatus 2 via the network interface 101. After that, the processing returns to step S201, and the processing of step S201 and the following steps described above are repeated.

If the CPU 110 finds that the user does not specify a channel in step S201, the processing goes to step S203.

In step S203, the CPU 110 checks if the switching of input is instructed by the user based on the operation signal from the operation unit 109. If the switching of input is instructed by the user, the processing goes to step 204.

In step S204, the CPU 110 transmits control information which requests to switch the input to the program reception control apparatus 2 via the network interface 101. After that, the processing returns to step S201 and the processing of step S201 and the following steps described above are repeated.

If the CPU 110 finds that the switching of input is not instructed by the user in step S203, the processing goes to step S205.

In step S205, the CPU 110 checks if the operation of the external apparatus 52 is instructed by the user based on the operation signal from the operation unit 109. If the operation of the external apparatus 52 is instructed by the user, the processing goes to step S206.

In step S206, the CPU 110 transmits control information including operation information specifying the contents of operation (for example, playback, stop, fast forward, rewind, or the like) to be performed for the program reception control apparatus 2, to the external apparatus 52 via the network interface 101. After that, the processing returns to step S201 and the processing of step S201 and the following steps described above are repeated.

If the CPU 110 finds that the operation of the external apparatus 52 is not instructed by the user in step S205, the processing goes to step S207.

In step S207, the CPU 110 checks if a packet transmission rate change is instructed by the user based on the operation signal from the operation unit 109. If a packet transmission rate change is instructed by the user, the processing goes to step S208.

In step S208, the CPU 110 transmits control information including the user-specified transmission rate to the program reception control apparatus 2 via the network interface 101. After that, the processing returns to step S201 and the processing of step S201 and the following steps described above are repeated.

If the CPU 110 finds that the packet transmission rate change is not instructed in step S207, the processing returns to step S201 and the processing of step S201 and the following steps described above are repeated.

The control information transmission processing of the terminal apparatus 3 is executed as described above.

The program reception control apparatus 2, which receives the control information from the terminal apparatus 3, controls its own operation based on the received control information.

Next, the control execution processing of the program reception control apparatus 2 will be described with reference to the flowchart in FIG. 10.

In step S251, the CPU 79 checks if control information including a channel change request is received from terminal apparatus 3. If control information including a channel change request is received, the processing goes to step S252.

In step S252, the CPU 79 identifies the channel to be selected based on the channel information included in the control information, and instructs the selection of the specified channel to the tuner 71.

In step S253, the tuner 71 selects the specified channel according to the instruction from the CPU 79. After that, the processing returns to step S251, and the processing of step S251 and the following steps described above are repeated.

If the CPU 79 finds that control information including a channel change request is not received from the terminal apparatus 3 in step S251, the processing goes to step S254.

In step S254, the CPU 79 checks if control information including an input switching request is received from the terminal apparatus 3. If control information including the input switching request is received, the processing goes to step S255.

In step S255, the CPU 79 requests the switching of the AV data to be output to the compression unit 74 to the switching unit 73.

In step S256, the switching unit 73 switches the AV data to be output to the compression unit 74 according to the instruction from the CPU 79. That is, if the AV data supplied originally from the tuner 71 is outputted to the compression unit 74, the switching unit 73 performs the processing of step S256 so that the AV data supplied from the external AV input unit 72 is switched and outputted to the compression unit 74. Conversely, if the AV data supplied originally from the external AV input unit 72 is outputted to the compression unit 74, the switching unit 73 performs the processing of step S256 so that the AV data supplied from the tuner 71 is switched and outputted to the compression unit 74. After the processing of step S256, the processing returns to step S251 and the processing of step S251 and the following steps described above are repeated.

If the CPU 79 finds that control information including an input switching request is not received from the terminal apparatus 3 in step S254, the processing goes to step S257.

In step S257, the CPU 79 checks if control information including operation information for operating the external apparatus 52 is received from the terminal apparatus 3. If the control information including operation information for operating the external apparatus 52 is received from the terminal apparatus 3, the processing goes to step S258.

In step S258, the CPU 79 supplies operation information which is included in the received control information and which includes the contents of operation on the external apparatus 52, to the external apparatus controller 80, and instructs the control of the external apparatus 52 based on the operation information to the external apparatus controller 80.

In step S259, the external apparatus controller 80 identifies the contents of operation on the external apparatus 52 based on the operation information supplied from the CPU 79, generates the control signal for causing the external apparatus 52 to execute the identified contents of operation, and outputs the generated control signal (for example, control signal such as playback, stop, fast forward, rewind, or the like) to the external apparatus 52. The external apparatus 52 controls its own operation based on the control signal supplied from the external apparatus controller 80. For example, if the control signal for playback is received from the external apparatus controller 80, the external apparatus 52 starts playing back the AV data. After the processing of step S259, the processing returns to step S251 and the processing of step S251 and the following steps described above are repeated.

If the CPU 79 finds that control information including operation information for operating the external apparatus 52 is not received from the terminal apparatus 3 in step S257, the processing goes to step S260.

In step S260, the CPU 79 checks if control information including a packet transmission rate change request is received from the terminal apparatus 3. If the control information including a packet transmission rate change request is received from the terminal apparatus 3, the processing goes to step S261.

In step S261, the CPU 79 instructs the change of the compression rate used to compress the AV data to the compression unit 74.

In step S262, the compression unit 74 changes the compression rate used to compress the AV data according to the instruction from the CPU 79.

In step S263, the CPU 79 changes the transmission rate by changing the size of a packet to be transmitted from the network interface 77 to the terminal apparatus 3. After that, the processing returns to step S251, and the processing of step S251 and the following steps described above are repeated.

If the CPU 79 finds that the control information including a packet transmission rate change request is not received from the terminal apparatus 3 in step S260, the processing returns to step S251, and the processing of step S251 and the following steps described above are repeated.

As described above, the control execution processing of the program reception control apparatus 2 is executed.

The control information transmission processing and the control execution processing described above allow the user to remotely specify the operation of the program reception control apparatus 2 and the external apparatus 52. In addition, the control signal that is outputted from the external apparatus controller 80 to the external apparatus 52 allows the user to utilize the external apparatus 52 originally owned by the user.

As described above, any broadcast can be viewed in real time even in an area other than reception coverage area 6 according to an embodiment of the present invention. In addition, the external apparatus 52 originally owned by the user can be utilized.

Although an information processing system to which an embodiment of the present invention is applied is described using the example in FIG. 1, the information processing system to which embodiments of the present invention may be applied is not limited to the example in FIG. 1, but may take various forms.

More specifically, an information processing system according to one embodiment may also be configured, for example, as shown in FIG. 11 and FIG. 12. That is, FIG. 11 and FIG. 12 are diagrams showing other configuration examples of an information processing system to which embodiments of the present invention is applied.

In the information processing systems in FIG. 11 and FIG. 12, base stations 2-1 and 2-2 are used as the program reception control apparatuses 2-1 and 2-2. In addition, three display apparatuses 3A to 3C are used as the terminal apparatus 3.

The base station 2-1, which has a communication antenna 202, can communicate wirelessly with each of the display apparatus 3A that has a communication antenna 251A, the display apparatus 3B that has a communication antenna 251B, and the display apparatus 3C that has a communication antenna 251C. (Hereinafter, if there is no need to distinguish among display apparatuses 3A to 3C, they are referred collectively to the display apparatus 3. This applies to the various components included therein).

The base station 2-1 has a television broadcast receiving antenna 201. The base station 2-1 is installed within the reception coverage area 6-1. Therefore, the base station 2-1 can receive a program broadcast from the broadcast antenna 5-1 of the broadcast station 4-1. That is, the base station 2-1 selects a predetermined broadcast from the received electric wave received via the television broadcast receiving antenna 201, generate the AV data of the selected broadcast program, and compress the data according to a standard specification such as MPEG2 or MPEG4 to generate compressed data. In addition, the base station 2-1 can encrypt the compressed data, segment the data into packets, and transmit the packets via the communication antenna 202 to the display apparatus 3.

The display apparatus 3 receives the compressed data via a communication antenna 251 and coverts the data to the original AV data. More precisely, the display apparatus 3 that receives a plurality of packets extracts data included in each packet and segmented into a predetermined size, and rearranges the extracted data into the original sequence of data. Because the rearranged data is the encrypted compressed data, the display apparatus 3 decrypts the encrypted compressed data, and expands it according to the compression (encoding) standard of the base station 2-1. This expanded data is the original AV data.

In addition, the display apparatus 3 converts the AV data into the video signal and the audio signal, displays the video corresponding to the video signal on a display unit 252, and outputs the sound corresponding to the audio signal from speakers 253-1 and 253-2.

In this way, the display apparatus 3 can receive a program broadcasted from the broadcast station 4-1, via the base station 2-1, and plays it back. This allows the user to view the program while freely moving around with the display apparatus 3.

In other words, the base station 2-1 can execute each of the viewing control processing of the program reception control apparatus in FIG. 6 as described above, the authentication processing of the program reception control apparatus in FIG. 8 as described above, and the control execution processing of the program reception control apparatus in FIG. 10 as describedabove. Further, the display apparatus 3 can execute each of the viewing control processing of the terminal apparatus in FIG. 4 and FIG. 5 as described above, the authentication processing of the terminal apparatus in FIG. 7 as described above, and the control information transmission processing of the terminal apparatus in FIG. 9 as described above.

If the base station 2-1 and the display apparatus 3 transfer various information between them via wireless communication, not via the Internet 1, as shown in FIG. 11, the authentication processing in FIG. 7 and FIG. 8 may be omitted.

It should be noted that, as shown in FIG. 11, the base station 2-1 may also be connected to the Internet 1.

Another base station 2-2 may have the function and the configuration basically similar to that of the base station 2-1. That is, the other base station 2-2 can also execute each of the viewing control processing of the program reception control apparatus in FIG. 6 as described above, the authentication processing of the program reception control apparatus in FIG. 8 as described above, and the control execution processing of the program reception control apparatus in FIG. 10 as described above and, in addition, connect to the Internet 1.

Therefore, the display apparatus 3 can also transmit and receive various information to or from the other base station 2-2 via the base station 2-1 and the Internet 1.

This allows the user, who uses the display apparatus 3, to remotely specify the operation of the other base station 2-2. As a result, a broadcast from the broadcast station 4-2 can be viewed (can be played back on the display apparatus 3) in real time even when the user (display apparatus 3) is in an area other than the reception coverage area 6-2 of the broadcast station 4-2 as shown in FIG. 11.

In response to a URL (Uniform Resource Locator) entered from the display apparatus 3 by the user and notified via the communication antenna 202, the base station 2-1 can also access a WWW (World Wide Web) server, which is specified by the URL and connected to the Internet 1 but not shown in the figure, and obtain a Web page described, for example, in HTML (Hyper Text Markup Language) format. The obtained Web page is compressed by a predetermined compression method, transmitted via the communication antenna 202 to the display apparatus 3, and is displayed on the display unit 252 of the display apparatus 3. This allows the user to use various contents on the Internet 1, while freely moving around, by operating the display apparatus 3 in the same manner in which the user views a (television broadcast) program. In addition, the user can operate the display apparatus 3 to transmit and receive E-mails to or from another information processing apparatus, which is connected to the Internet 1 but not shown in the figure, for example, a personal computer owned by some other user.

Each of the display apparatuses 3 has a memory card slot 254 into which a removable memory card (trademark) 301 can be inserted. The memory card 301 contains a nonvolatile flash memory in which various information can be stored. For example, the user can store an image (data) photographed by a digital still camera into the memory card 301, and insert the memory card 301 into the memory card slot 254 to display the photographed image on the display unit 252. The user can also take a favorite snap (still image or short moving image) of a program which is displayed on the display unit 252 into the memory card 301, and plays it back later on the display unit 252.

In addition, the user can use the memory card 301 to install various programs stored in that card into the display apparatus 3.

In the mean time, the display apparatus 3 can connect also to the Internet 1 directly as shown in FIG. 12. That is, the display apparatus 3 can also communicate (transmit and receive various information) with each of the base station 2-1 and the base station 2-2 via the Internet 1. In other words, the information processing system exactly similar to the mode (connection mode) shown in FIG. 1 can also be implemented easily by using the base station 2 and the display apparatus 3 as shown in FIG. 12.

Therefore, the user that uses the display apparatus 3 can remotely specify the operation of each of the base stations 2-1 and 2-2. As a result, even if the user (display apparatus 3) is outside the reception coverage area 6 of the broadcast station 4 as shown in FIG. 12, the user can view (play back on the display apparatus 3) a broadcast from the broadcast station 4 in real time.

In the description below, when the base stations 2-1 and 2-2 need not be distinguished individually, they are called collectively as the base station 2.

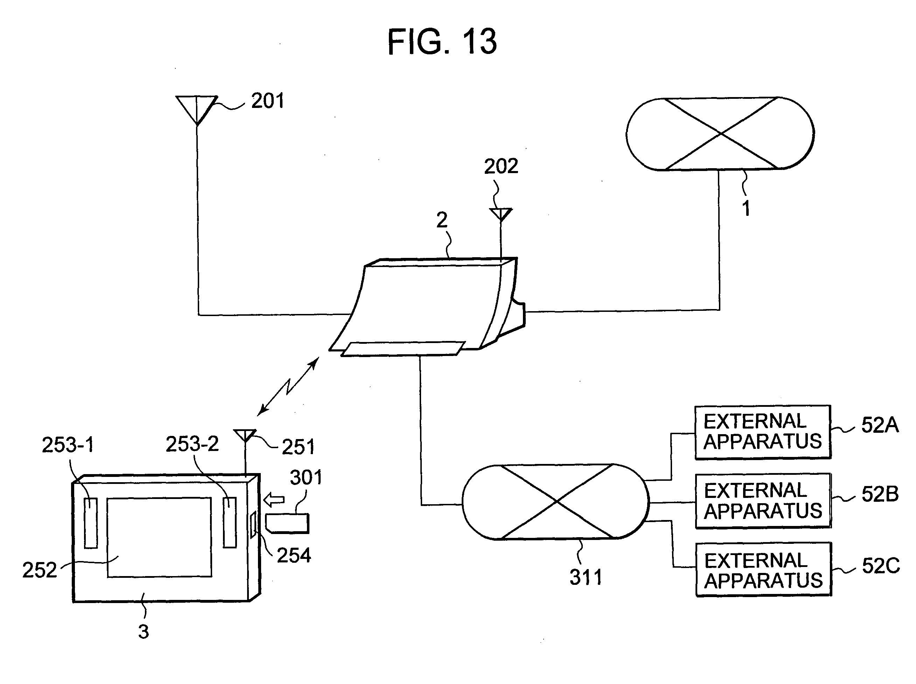

Furthermore, the base station 2 can be connected to a home network 311 built, for example, as a LAN (Local Area Network) as shown in FIG. 13. To this home network 311, the base station 2 as well as any number of external apparatuses 52 can be connected (In the example in FIG. 13, three external apparatuses 52A to 52C are connected. In the description below, they are collectively called as external apparatus 52 when they need not be distinguished individually). This allows the base station 2 to perform communication with, that is, to transmit and receive various information to or from, the external apparatuses 3 via the home network 311.

Therefore, the user can operate the display apparatus 3 to specify the operation of the external apparatus 52 connected to the home network 311 via the base station 2. The user can also utilize the originally owned external apparatus 52 by outputting the control signal from the base station 2 to the external apparatus 52.

Next, an example of the internal configuration of the base station 2 will be described with reference to FIG. 14. That is, FIG. 14 is a block diagram showing an example of the internal configuration of the base station 2.

A CPU 203 controls the operation of the components connected via a bus 204 in response to an instruction entered by the user through the operation of an input unit 210 and to an instruction transmitted from the display apparatus 3 via the communication antenna 202. That is, the CPU 203 corresponds to the CPU 79 in FIG. 2.

A ROM 205 stores the programs that are control programs used by the CPU 203 and that are programs for controlling the basic operation. A RAM 206 temporarily stores the programs used by the CPU 203 and various data generated when processing is executed.

A program storage unit 207 for the display apparatus 3A stores the control program corresponding to the control program (control program stored in a program storage unit 262 in FIG. 15 that will be described later) of the display apparatus 3A. That is, for example, when the control program stored in the program storage unit 262 is started in the display apparatus 3A, the CPU 203 starts the control program stored in the display apparatus 3A program storage unit 207 for communication with the display apparatus 3A.

Similarly, a display apparatus 3B program storage unit 208 stores the control program corresponding to the control program of the display apparatus 3B, and a display apparatus 3C program storage unit 209 stores the control program corresponding to the control program of the display apparatus 3C.

The input unit 210 configured with a plurality of buttons or dials and so on accepts the input of a user operation, and outputs the operation signal generated based on the accepted operation to the CPU 203. That is, the input unit 210 corresponds to the operation unit 78 in FIG. 2.

A communication unit 211 configured with a MODEM, a terminal adapter, and so on transmits and receives various information to and from various information processing apparatuses connected to the Internet 1. For example, in the example in FIG. 11, the communication unit 211 of the base station 2-1 transmits and receives various information to and from the other base station 2-2 via the Internet 1. Also, in the example in FIG. 12, the communication unit 211 of the base station 2-1 transmits and receives various information to and from the other base station 2-2 and each of the display apparatuses 3A, 3B, and 3C via the Internet 1.

In addition, the communication unit 211 transmits and receives various information to and from various information processing apparatuses connected to the home network 311, for example, to and from each of the external apparatuses 52A, 52B, and 52C in the example in FIG. 13.

As described above, the communication unit 211 is though of as a block having the functions of the external AV input unit 72, network I/F 77, and external apparatus controller 80 in FIG. 2. That is, the communication unit 211 corresponds to each of the external AV input unit 72, network I/F 77, and external apparatus controller 80 in FIG. 2.

A tuner 212 selects a broadcast instructed by the CPU 203 among the received electric waves received by the television broadcast receiving antenna 201, performs A/D conversion for the video signal and the audio signal of the selected broadcast to generate AV data, and outputs the generated AV data to a switching unit 213. That is, the tuner 212 corresponds to the tuner 71 in FIG. 2.

The switching unit 213 selects one of the AV data supplied from the tuner 212 and the AV data received by the communication unit 211 and supplied via the bus 204 according to the instruction from the CPU 203, and outputs it to a compression unit 214. That is, the switching unit 213 corresponds to the switching unit 73 in FIG. 2.

The compression unit 214 compresses the AV data supplied from the switching unit 213 using a standard specification such as MPEG2 or MPEG4, and outputs the resulting compressed data to an encryption unit 215. The compression unit 214 compresses the AV data at a compression rate instructed by the CPU 203. That is, the compression unit 214 corresponds to the compression unit 74 in FIG. 2.

The encryption unit 215 encrypts the compressed data supplied from the compression unit 214 based on a preset encryption method according to the instruction from the CPU 203, and outputs the encrypted compressed data to a packet creation unit 216. That is, the encryption unit 215 corresponds to the encryption unit 75 in FIG. 2.

The packet creation unit 216 segments the encryptedcompressed datasuppliedfromtheencryption unit 215 into a predetermined size according to the instruction from the CPU 203, adds header information and so on to create a plurality of packets, and sequentially outputs each of the plurality of created packets to a transmission buffer 217. That is, the packet creation unit 216 corresponds to the packet creation unit 76 in FIG. 2.

The transmission buffer 217 holds the plurality of packets sequentially supplied from the packet creation unit 76, and sequentially supplies each the plurality of held packets to a transmission processing unit 218 or the communication unit 211 according to the timing instructed by the CPU 203. More precisely, when the mode of communication between the base station 2 and the display apparatus 3 is a wireless communication via the communication antenna 202 as shown in FIG. 11, the packets are supplied from the transmission buffer 217 to the transmission processing unit 218. On the other hand, when the mode of communication between the base station 2 and the display apparatus 3 is a communication via the Internet 1 as shown in FIG. 12, the packets are supplied from the transmission buffer 217 to the communication unit 211.

The transmission processing unit 218 performs modulation processing and D/A conversion processing (Digital/Analog conversion processing) for the data (packets) supplied from the transmission buffer 217, and supplies the resulting signal to a communication control unit 220.

The communication control unit 220 transmits the signal supplied from the transmission processing unit 218 via the communication antenna 202 to the display apparatus 3 that requests the signal (packets). The communication control unit 220 also receives the signal transmitted from the display apparatus 3 via the communication antenna 202, and supplies to a reception processing unit 219.

The reception processing unit 219 performs amplification processing, demodulation processing, A/D conversion processing, and so on for the signal supplied from the communication control unit 220, and supplies the resulting data to the CPU 203 and so on.

As described above, the base station 2 in FIG. 14 has the circuit blocks corresponding to each of all the components from the tuner 71 to the external apparatus controller 80 in FIG. 2. Therefore, as described above, the base station 2 in FIG. 14 can execute each of the viewing control processing of the program reception control apparatus in FIG. 6 as described above, the authentication processing of the program reception control apparatus in FIG. 8 as described above, and the control execution processing of the program reception control apparatus in FIG. 10 as described above.

Next, an example of the internal configuration of the display apparatus 3 in FIG. 11 and FIG. 12 will be described with reference to FIG. 15. That is, FIG. 15 is a block diagram showing an example of the internal configuration of the display apparatus 3.

A main control unit 255 installs the control program stored in a built-in ROM, not shown, or stored in the program storage unit 262 into a RAM not shown based on the various instructions entered by the user through the operation of an operation input unit 256, and controls the whole operation of the display apparatus 3.

The main control unit 255 creates the control information for controlling the operation of the tuner 212, switching unit 213, and compression unit 214 of the base station 2 in FIG. 14 and the external apparatus 52 in FIG. 13, for example, based on the operation signal from the operation input unit 256, and transmits the created control information via the communication antenna 251 to the base station 2. Note that, when the display apparatus 3 is at a location where wireless communication cannot be made with the base station 2 and is connected to the Internet 1 as shown in FIG. 12 as described above, the main control unit 255 transmits the created control information from the Internet communication control unit 260 to the base station 2 via the Internet 1.

As described above, the main control unit 255 corresponds to the CPU 110 in FIG. 3.

The operation input unit 256 configured with buttons, dials, a touch panel, a touch pen, and so on, accepts the input of an operation from the user and, outputs the operation signal generated based on the accepted operation to the main control unit 255. That is, the operation input unit 256 corresponds to the operation unit 109 in FIG. 3.

The communication control unit 257 transmits the signal supplied from a transmission processing unit 258 to the base station 2 via the communication antenna 251. The communication control unit 257 receives the signal, transmitted from the base station 2, via the communication antenna 251, and supplies it to the reception processing unit 259.

The transmission processing unit 258 performs D/A conversion and modulation processing for data, for example, the control information supplied from the main control unit 255, and supplies the resulting signal to the communication control unit 257.

The reception processing unit 259 performs amplification processing, demodulation processing, A/D conversion processing, and so on for the signal supplied from the communication control unit 257, and supplies the resulting data to the main control unit 255. For example, the reception processing unit 259 performs various processing including the processing as described above for the television program signal supplied from the communication control unit 257, and supplies the resulting AV data (packets) to the main control unit 255.

The Internet communication control unit 260 configured with a MODEM, a terminal adapter, and so on, transmits and receives information to and from various information processing apparatuses connected to the Internet 1.

For example, if the display apparatus 3 is at a location where wireless communication cannot be made with the base station 2 as shown in FIG. 12 as described above and, at the same time, the Internet communication control unit 260 is connected to the Internet 1, the Internet communication control unit 260 transmits the control information supplied from the main control unit 255 to the base station 2 via the Internet 1. For example, if packets (AV data) are transmitted from the base station 2 via the Internet 1, the Internet communication control unit 260 receives them, and supplies them to the main control unit 255. In addition, if various instructions are transmitted from the base station 2 via the Internet 1, the Internet communication control unit 260 receives them, and supplies them to the main control unit 255.

As described above, the Internet communication control unit 260 corresponds to the network I/F 101 in FIG. 3.

A playback control unit 261 plays back AV data supplied from the main control unit 255. That is, the playback control unit 261 performs control processing for displaying the video corresponding to the AV data on the display unit 252, and for outputting the sound corresponding to the AV data from a speaker 253.

More in detail, the AV data supplied from the base station 2 are in the form of packets as described above. That is, through the base station 2, the AV data is compressed and encrypted, the resulting encrypted compressed data is divided (segmented into a predetermined size), and a plurality of packets containing each of the plurality of pieces of divided data are generated, and are transmitted to the display apparatus 3. The plurality of packets are accepted sequentially by the communication control unit 257 or the Internet communication control unit 260, and are supplied sequentially to the playback control unit 261 via the main control unit 255.

The playback control unit 261 extracts data from the plurality of packets sequentially supplied from the main control unit 255, and rearranges the extracted data into a sequence of data. The sequence of rearranged data is the encrypted compressed data.

Next, the playback control unit 261 decrypts the encrypted compressed data according to the decryption method corresponding to the encryption method of the encryption unit 215 (FIG. 14) of the base station 2 and, in addition, expands the data based on the compression (encoding) standard of the compression unit 214 (FIG. 14) of the base station 2. The data expanded in this way becomes the original AV data.

The playback control unit 261 supplies the video signal, which is the original AV data restored in this way and which is based on the video data, to the display unit 252. The playback control unit 261 sometimes supplies the video signal of a predetermined guide screen image and so on to the display unit 252 according to the instruction from the main control unit 255. In response, the display unit 252 displays the video based on the video signal supplied from the playback control unit 261.

The playback control unit 261 also supplies the audio signal, which is the original AV data restored in this way and which is based on the audio data, to the speaker 253. In response, the speaker 253 outputs the sound based on the audio signal supplied from the playback control unit 261.

As described above, the playback control unit 261 is thought of as a block having the functions of the components from the rearrangement unit 102 to the audio output unit 107 in FIG. 3. That is, the playback control unit 261 corresponds to each of the components from the rearrangement unit 102 to the audio output unit 107 in FIG. 3. Also, the display unit 252 corresponds to the monitor 106 in FIG. 3, and the speaker 253 corresponds to the speaker 108 in FIG. 3.

The program storage unit 262, in which the control program is stored as described above, is referenced as necessary by the main control unit 255.

A memory card driver 263 writes and reads various data to or from a memory card inserted into the memory card slot 254. For example, the memory card driver 263 reads the control program stored in the memory card based on an instruction from the main control unit 255, and stores in the program storage unit 262.

As described above, the display apparatus 3 in FIG. 15 has the circuit blocks corresponding to each of the components from network I/F 101 to the CPU 110 in FIG. 3. Therefore, the display apparatus 3 can perform each of the viewing control processing of the terminal apparatus in FIG. 4 and FIG. 5 as described above, the authentication processing of the terminal apparatus in FIG. 7 as described above, and the control information transmission processing of the terminal apparatus in FIG. 9 as described above.

Although there are two program reception control apparatuses 2-1 and 2-2, as shown in FIG. 1 or FIG. 11 and FIG. 12, the number of program reception control apparatuses may be one or three or more. If there are multiple program reception control apparatuses 2, it is possible that the tuners of the apparatuses receive different broadcasts. That is, it is possible, for example, that the tuner of the first program reception control apparatus is a tuner for a terrestrial analog broadcast, the tuner of the second program reception control apparatus is a tuner for a terrestrial digital broadcast, the tuner of the third program reception control apparatus is a tuner for a BS analog/digital broadcast, and the tuner of the fourth program reception control apparatus is a tuner for a CS broadcast. The ability to select a desired program reception control apparatus from multiple program reception control apparatuses with different tuners allows the user to have more choices of programs that can be viewed.

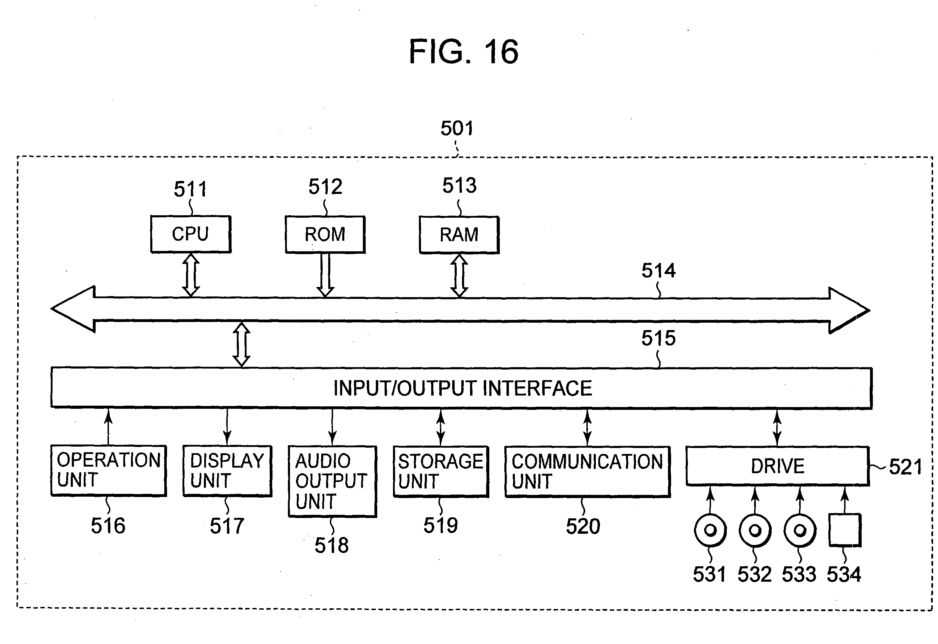

The sequence of processing described above can be executed by both hardware and software. In this case, each of the program reception control apparatus 2 and the terminal apparatus 3 can also be configured, for example, by a general-purpose personal computer 501 such as the one shown in FIG. 16.

In FIG. 16, a CPU 511 executes various processing according to the program stored in a ROM 512 or the program loaded from a storage unit 519 to a RAM 513. Data required by the CPU 511 to execute various processing is also stored as necessary in the RAM 513.

The CPU 511, ROM 512, and RAM 513 are interconnected via a bus 514. An input/output interface 515 is also connected to this bus 514.

An operation unit 516 configured with a keyboard, a mouse and so on, a display unit 517 configured with a LCD, a CRT and so on, an audio output unit 518 configured with a speaker and so on for outputting a sound, the storage unit 519 configured with a hard disk and so on, and a communication unit 520 configured with a MODEM, terminal adapter and so on are connected to this input/output interface 515. The communication unit 520 performs communication processing via a network including the Internet 1 and the home network 311.

A drive 521 is also connected as necessary to the input/output interface 515. A magnetic disk 531, an optical disc 532, a magneto-optical disk 533, or a semiconductor memory 534 is mounted as necessary on the drive, and a computer program read from the medium is installed in the storage unit 519 as necessary.

To execute a sequence of operations through software, the programs of the software are installed from the network or from a recording medium into a computer in which the special hardware is built or into a computer, for example, a general-purpose personal computer that can execute various functions by having various programs installed therein.

As shown in FIG. 16, this recording medium is configured not only by a package medium such as the magnetic disk 531 (including a flexible disk), optical disc 532 (including a CD-ROM, a DVD) , magneto-optical disk 533 (including an MD (Mini-Disk)), or semiconductor memory 534 which is distributed to the user separately from the main unit, for supplying a program and in which a program is stored but also by the ROM 512 or a hard disk included in the storage unit 519 which is built in the main unit, and is supplied to the user and in which a program is stored.

In this specification, the steps describing the program stored in a program storage medium include not only processing executed on a time-series basis according to the sequence in which the steps are executed but also processing executed not always on a time-series basis but in parallel or individually.

In this specification, the system refers to the whole of the apparatus comprising a plurality of units.

An embodiment of the present invention provides a broadcast reception system, wherein a program reception control apparatus is connected to the Internet via a network interface to which is connected a terminal apparatus carried by a user. The broadcast received at an antenna is selected by a tuner, A/D converted, compressed at a compression unit, and encrypted at an encryption unit. The encrypted data from the encryption unit is changed to packets at packet creation unit, and transmitted to the terminal apparatus via the network interface. A User is able to view the program in real time before the end of the broadcast for the program by successively creating data based on the received data, and transmitting them.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information processing system including a first information processing apparatus installed in a reception coverage area for receiving broadcast, and a second information processing apparatus for viewing video/audio based on the broadcast received by the first information processing apparatus, wherein;
said first information processing apparatus comprises;
receiving means for receiving a broadcast;
creation means for creating data based on a received signal of the broadcast received by the receiving means;
first communication means for transmitting the data created by the creation means; and
first control means for controlling transmission of data by said first communication means wirelessly or via a network, and wherein;
said second information processing apparatus comprises;
second communication means for receiving the data from the first information processing apparatus; and
presentation means for presenting information based on the data received by said second communication means; and
second control means for controlling said second information processing apparatus so that said second information processing apparatus receives the data wirelessly if installed in a wireless communication coverage area; and said second information processing apparatus receives the data via a network if installed outside the wireless communication coverage area, wherein;
said second information processing apparatus enables to view the video/audio in real time by receiving data based on the broadcast.

2. The information processing system according to claim 1, wherein;
said second information processing apparatus further comprises input means for inputting an operation signal generated through a user operation;
said second communication means transmits a viewing request based on the operation signal received from the input means to said first information processing apparatus wirelessly or via the network;
said first communication means receives the viewing request from said second information processing apparatus in said first information processing apparatus; and
said receiving means receives the broadcast based on the viewing request.

3. The information processing system according to claim 1, wherein;
said second information processing apparatus further comprises;
input meansfor inputting operation signal by user operation; and
authentication means for executing authentication processing to transmit user-entered authentication data or pre-stored authentication data as authentication data requested from said first information processing apparatus with regard to the viewing request in response to a connection request based on the operation signal from the input means; and wherein;
said second information processing apparatus transmits the viewing request based on the operation signal to the first information processing apparatus if a permission to connect to the first information processing apparatus is obtained through the authentication processing.

4. The information processing system according to claim 3, wherein;
said first information processing apparatus further comprises authentication means for requesting authentication data with regard to the connection request from said second information processing apparatus, checking if the authentication data transmitted from said second information processing apparatus matches previously stored authentication data or not, and executing authentication processing only if they match.

5. The information processing system according to claim 4, wherein;
said first information processing apparatus further comprises encryption means for encrypting the data created by the creation means; and
said second information processing apparatus further comprises decryption means for decrypting the encrypted data, and wherein;
said first communication means transmits the encrypted data to the second information processing apparatus after the authentication processing; and
said second information processing apparatus receives the encrypted data transmitted from said first communication means via the second communication means, and decrypts the encrypted data through the decryption means.

6. The information processing system according to claim 4, wherein;
said first information processing apparatus omits the authentication processing when wirelessly receiving the connection request from the second communication means.

7. An information processing method for a first information processing apparatus that receives broadcast, and transmits the data based on the received signal to a second information processing apparatus, said method comprising:
a receiving step for receiving the broadcast based on a viewing request from said second information processing apparatus;
a creation step for creating the data based on the received signal; and
a transmission step for transmitting the data created by said creation step to the second information processing apparatus, wherein
said transmission step transmits wirelessly when the second information processing apparatus is at a location where wireless communication is possible; and transmits via a network when the second information processing apparatus is at a location where wireless communication is impossible.

8. The information processing method according to claim 7, further comprising:
a communication step for receiving the viewing request from the second information processing apparatus wirelessly or via a network.

9. The information processing method according to claim 7, further comprising:
a requesting step for requesting authentication data in response to the connection request from the second information processing apparatus; and
an authentication step for authenticating the second information processing apparatus based on the authentication data from the second information processing apparatus, wherein;
the receiving step, the creation step, and the transmission step are executed in response to the viewing request from said second information processing apparatus after the authentication processing in this authentication step.

10. The information processing method according to claim 9, wherein;
said authentication processing in the authentication step checks if the authentication data transmitted from the second information processing apparatus matches previously stored authentication data, and permits the viewing request only when they match.

11. The information processing method according to claim 9, further comprising:
an encryption step for encrypting the data created by the creation step by after being available the data for decryption, and the authentication processing by the authentication step, wherein;
said transmission step transmits the data encrypted by the encryption step to the second information processing apparatus.

12. An information processing method for use by a second information processing apparatus that communicates with a first information processing apparatus which receives a broadcast and transmits data based on a received signal, said method comprising the steps of:
a first transmission step for transmitting a connection request based on a user operation;
a second transmission step for transmitting authentication data inputted by a user or pre-stored authentication data for use as authentication data requested by the first information processing apparatus in response to the connection request;
a third transmission step for transmitting the viewing request by the user operation after the authentication by the first information processing apparatus;
a receiving step for receiving data transmitted from the first information processing apparatus in response to the third transmission step; and
a presentation step for presenting a broadcast-based video or audio through the reception of the data, wherein;
the transmission and the reception in the first, second, third transmission steps and the receiving step are executed wirelessly or via a network.
